# EUROPEAN PATENT SPECIFICATION

(11) **EP 3 026 294 B1**
(45) Date of publication and mention of the grant of the patent: **14.03.2018**
(21) Application number: 15196142.2
(22) Date of filing: 24.11.2015
(51) Int. Cl.: F16F 15/123

(54) **DAMPER APPARATUS**
DÄMPFERVORRICHTUNG
APPAREIL AMORTISSEUR

(30) Priority: 25.11.2014 JP 2014238205
(43) Date of publication of application: 01.06.2016
(73) Proprietor: AISIN SEIKI KABUSHIKI KAISHA, Kariya-shi, Aichi 448-8650 (JP)
(72) Inventor: NASU, Tsuyoshi, Kariya-shi, Aichi 448-8650 (JP); HAYASHI, Daisuke, Kariya-shi, Aichi 448-8650 (JP)
(74) Representative: Kramer Barske Schmidtchen Patentanwälte PartG mbB

(56) References cited:
- EP-A1- 2 597 331
- FR-A1- 2 620 502
- US-A1- 2009 139 825

## Description

### TECHNICAL FIELD

Embodiments according to this disclosure relate to a damper apparatus.

### BACKGROUND DISCUSSION

For example, a damper apparatus is known which is disposed between an output shaft of an engine and an input shaft of a transmission. For example, the damper apparatus has two rotors which are respectively connected to the output shaft and the input shaft, and an elastic body or a friction material which is interposed between the rotors. In this damper apparatus, rotational fluctuations input from the engine are attenuated by the elastic body or the friction material.

A technique disclosed in International Publication No. WO2009/036727 (Reference 1) employs a structure having no stopper. Consequently, the structure is subjected to torsion until a spring comes into close contact with the structure. In order to prevent the spring from coming into close contact with the structure within a predetermined torsion angle range, it is necessary to increase torsional rigidity.

US 2009/0139825 A1 discloses a torque fluctuation absorber including an output plate, a first rotating plate, a first elastic member engaged with the output plate and the first rotating plate, a second elastic member capable of transmitting power from a power source to the first rotating plate, and a power transmission control mechanism. The first elastic member and the second elastic member are arranged radially offset.

FR 2 620 502 A1 discloses a torsion damping device.

EP 2 597 331 A1 discloses a torque fluctuation absorbing device, including a plurality of damper units capable of suppressing increase of radial and axial dimensions of the device.

### SUMMARY

A damper apparatus according to an embodiment of this disclosure includes a first rotor that is rotatable around a rotation center, a second rotor that is rotatable around the rotation center, a third rotor that is interposed between the first rotor and the second rotor, and that is rotatable around the rotation center, a first elastic portion that is interposed between the first rotor and the third rotor, and that is elastically compressed by the first rotor rotating to one side in a rotation direction relative to the third rotor, a second elastic portion that is interposed between the third rotor and the second rotor, and that is elastically compressed by the third rotor rotating to one side in the rotation direction relative to the second rotor, a first stopper portion that is disposed in the first rotor, a second stopper portion that is disposed in the third rotor, and that restrains the first rotor by coming into contact with the first stopper portion in a state where the first rotor rotates at a first angle to one side in the rotation direction relative to the second rotor, and from rotating to one side in the rotation direction relative to the third rotor, a third stopper portion that is disposed in the third rotor; and a fourth stopper portion that is disposed in the second rotor, and that restrains the third rotor by coming into contact with the third stopper portion in a state where the first rotor rotates at a second angle to one side in the rotation direction relative to the second rotor, and from rotating to one side in the rotation direction relative to the second rotor. Accordingly, according to the damper apparatus of the embodiment, compared to a configuration in which limited close contact of a coil spring restrains an angle range of two rotors, the first and second elastic portions are prevented from being damaged. Therefore, it is possible to decrease torsional rigidity of the damper apparatus.

In the damper apparatus, the first stopper portion may include a first support member which is swingably supported by the first rotor, and which supports one end portion of the first elastic portion. The second stopper portion may include a second support member which is swingably supported by the third rotor, which supports the other end portion of the first elastic portion, and which restrains the first rotor by coming into contact with the first support member in a state where the first rotor rotates at the first angle to one side in the rotation direction relative to the second rotor, and from rotating to one side in the rotation direction relative to the third rotor. The third stopper portion may include a third support member which is swingably supported by the third rotor, and which supports one end portion of the second elastic portion. The fourth stopper portion may include a fourth support member which is swingably supported by the second rotor, which supports the other end portion of the second elastic portion, and which restrains the third rotor by coming into contact with the third support member in a state where the first rotor rotates at the second angle to one side in the rotation direction relative to the second rotor, and from rotating to one side in the rotation direction relative to the second rotor. Accordingly, according to the damper apparatus of the embodiment with this configuration, when the stopper portion is present between the elastic portion and the rotor so as to swingably support the stopper portion, a space is formed in which the stopper portion is movable along a circumferential direction of the rotor. Therefore, it is possible to widen a region in which the stopper portion is movable.

In the damper apparatus, the first elastic portion may include a first coil spring. The first stopper portion may include a first convex portion which is arranged inside the first coil spring. The second stopper portion may include a second convex portion which is arranged inside the first coil spring, and which restrains the first rotor by coming into contact with the first convex portion in a state where the first rotor rotates at the first angle to one side in the rotation direction relative to the second rotor, and from rotating to one side in the rotation direction relative to the third rotor. The second elastic portion may include a second coil spring. The third stopper portion may include a third convex portion which is arranged inside the second coil spring. The fourth stopper portion may include a fourth convex portion which is arranged inside the second coil spring, and which restrains the third rotor by coming into contact with the third convex portion in a state where the first rotor rotates at the second angle to one side in the rotation direction relative to the second rotor, and from rotating to one side in the rotation direction relative to the second rotor. Accordingly, according to the damper apparatus of the embodiment with this configuration, the first to fourth stopper portions can be further miniaturized.

In the damper apparatus, the first angle and the second angle may be different from each other. Accordingly, according to the damper apparatus of the embodiment with this configuration, a torsion angle between the first rotor and the second rotor which is formed by torque acting on the damper apparatus changes the damper apparatus into a state where the first elastic portion and the second elastic portion generate the torsional rigidity of the damper apparatus, a state where the second elastic portion generates the torsional rigidity of the damper apparatus, and a state where the first to third rotors whose relative rotations are restrained by the first to fourth stopper portions generate the torsional rigidity of the damper apparatus. Rotational fluctuations are more likely to be attenuated by combining these multiple torsional rigidities. Furthermore, the respective torsional rigidities can be allocated within a predetermined torsion angle range by adjusting the multiple torsional rigidities. Compared to a case of a single torsional rigidity, desired torque capacity can be ensured.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross-sectional view illustrating a damper apparatus according to a first embodiment;
Fig. 2 is a front view partially illustrating the damper apparatus according to the first embodiment by partially cutting out a first disk plate;
Fig. 3 is a front view illustrating the damper apparatus according to the first embodiment by omitting a drive plate;
Fig. 4 is a cross-sectional view partially illustrating the damper apparatus located at a position different from that in Fig. 1 according to the first embodiment;
Fig. 5 is a top view schematically illustrating the drive plate, a driven plate, a first seat, and a fourth seat according to the first embodiment;
Fig. 6 is a cross-sectional view illustrating an intermediate plate, the driven plate, the first seat, and a second seat according to the first embodiment;
Fig. 7 is a top view schematically illustrating the intermediate plate, the second seat, and a third seat according to the first embodiment;
Fig. 8 is a graph illustrating an example of characteristics of the damper apparatus according to the first embodiment;
Fig. 9 is a front view illustrating the damper apparatus in a series region according to the first embodiment;
Fig. 10 is a front view illustrating the damper apparatus in a parallel region according to the first embodiment;
Fig. 11 is a front view illustrating the damper apparatus in a contact region according to the first embodiment;
Fig. 12 is a front view illustrating a damper apparatus according to a second embodiment; and
Fig. 13 is a front view illustrating a damper apparatus according to a third embodiment.

### DETAILED DESCRIPTION

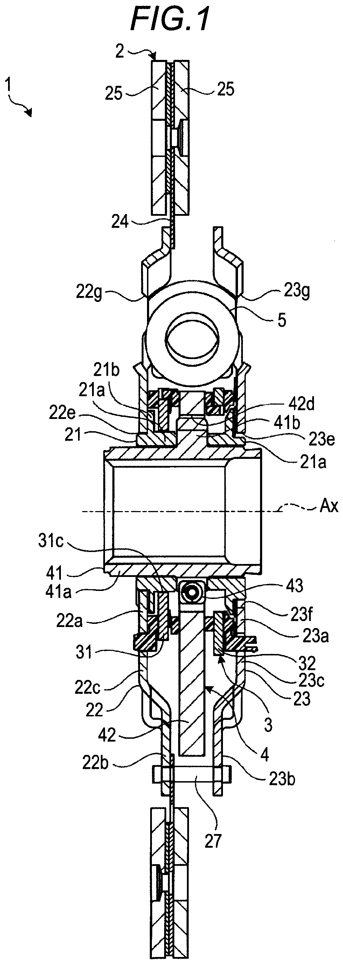

Hereinafter, a first embodiment will be described with reference to Figs. 1 to 11. When configuration elements according to embodiments are described, the elements may also be described using multiple representations. The configuration elements and description thereof do not hinder other representations which are not described herein. Furthermore, the configuration elements and description in which the multiple representations are not described do not hinder other representations from being newly described.

Fig. 1 is a cross-sectional view illustrating a damper apparatus 1 according to a first embodiment. As illustrated in Fig. 1, the damper apparatus 1 has a drive plate 2 located on an outer side, an intermediate plate 3 located on an inner side, and a driven plate 4 located on a further inner side. The drive plate 2 is an example of a second rotor. The intermediate plate 3 is an example of a third rotor. The driven plate 4 is an example of a first rotor.

The drive plate 2, the intermediate plate 3, and the driven plate 4 are respectively rotatable around a rotation axis Ax illustrated in Fig. 1. The rotation axis Ax is an example of a rotation center. Hereinafter, s direction orthogonal to the rotation axis Ax is referred to as a radial direction of the rotation axis Ax or simply a radial direction, a direction extending along the rotation axis Ax is referred to as an axial direction of the rotation axis Ax or simply an axial direction, and a direction rotating around the rotation axis Ax is referred to as a circumferential direction of the rotation axis Ax or simply a circumferential direction.

The drive plate 2 is rotatable independently from the intermediate plate 3, and is rotatable independently from the driven plate 4. In other words, the drive plate 2, the intermediate plate 3, and the driven plate 4 are mutually and relatively rotatable.

For example, the drive plate 2 is connected to a crankshaft of an engine via a flywheel. Without being limited to the engine, the drive plate 2 may be connected to other drive sources such as motors, or may be connected to other devices.

The crankshaft extends along the rotation axis Ax. For example, the flywheel is formed in a disk shape extending in the radial direction of the rotation axis Ax. The engine rotates the flywheel via the crankshaft, thereby rotating the drive plate 2 together with the flywheel. That is, rotations generated by the engine are transmitted to the drive plate 2 via the flywheel.

The drive plate 2 has a bush 21, a first disk plate 22, a second disk plate 23, a support plate 24, and two lining portions 25, sequentially from a position closer to the rotation axis Ax.

The bush 21 has two boss portions 21a and multiple locking portions 21b. The boss portion 21a is an example of a second fixing portion, and is a substantially cylindrical portion extending along the rotation axis Ax. The two boss portions 21a are arranged side by side by leaving a gap therebetween in the axial direction of the rotation axis Ax. The locking portions 21b are portions which respectively protrude from the outer peripheral surface of the two boss portions 21a in the radial direction of the rotation axis Ax.

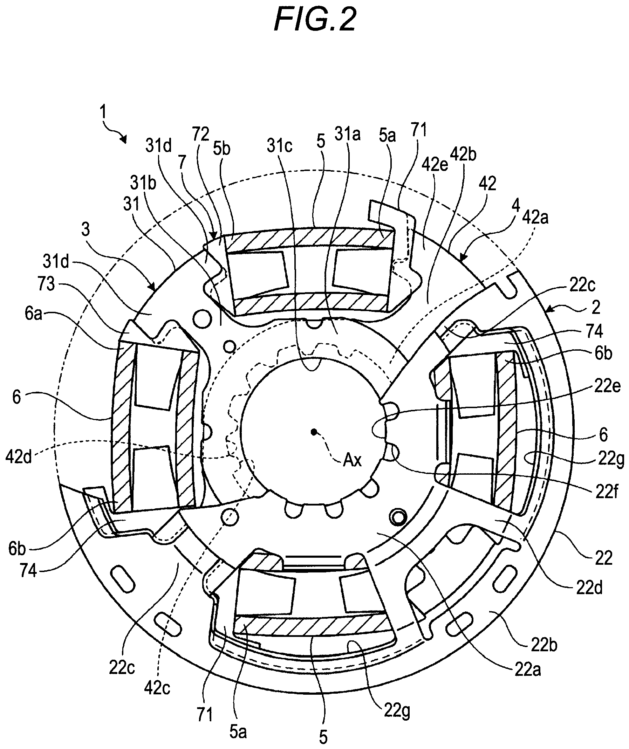

Fig. 2 is a front view partially illustrating the damper apparatus 1 by partially cutting out the first disk plate 22. Fig. 2 illustrates only the first disk plate 22 in the drive plate 2.

As illustrated in Fig. 2, the first disk plate 22 is formed in a disk shape extending in the radial direction of the rotation axis Ax. The first disk plate 22 has an inner frame portion 22a, an outer frame portion 22b, two first frame portions 22c, and two second frame portions 22d. The number of the first frame portions 22c and the second frame portions 22d is not limited to this configuration.

The inner frame portion 22a is a disk-shaped portion extending in the radial direction of the rotation axis Ax. The inner frame portion 22a is formed in an annular shape which has a fitting hole 22e extending along the rotation axis Ax. The inner frame portion 22a further has a spline portion 22f formed by using multiple grooves extending from the inner peripheral surface of the fitting hole 22e in the radial direction.

As illustrated in Fig. 1, one boss portion 21a of the bush 21 is fitted into the fitting hole 22e. The locking portion 21b protruding from the boss portion 21a is fitted into the spline portion 22f of the first disk plate 22. In this manner, the first disk plate 22 is attached to the bush 21, thereby allowing the first disk plate 22 and the bush 21 to be rotatable around the rotation axis Ax.

As illustrated in Fig. 2, the outer frame portion 22b is a disk-shaped portion extending in the radial direction of the rotation axis Ax. The outer frame portion 22b is formed in an annular shape surrounding the inner frame portion 22a by leaving the gap therebetween. That is, the inner diameter of the outer frame portion 22b is larger than the outer diameter of the inner frame portion 22a.

The first frame portion 22c and the second frame portion 22d are connected between the outer periphery of the inner frame portion 22a and the inner periphery of the outer frame portion 22b. The two first frame portions 22c extend from the inner frame portion 22a in the radial direction of the rotation axis Ax, and in directions opposite to each other. The two second frame portions 22d extend from the inner frame portion 22a in the radial direction of the rotation axis Ax, and in directions opposite to each other. According to the present embodiment, the direction in which the first frame portion 22c extends and the direction in which the second frame portion 22d extends are substantially orthogonal to each other. However, the directions in which the first and second frame portions 22c and 22d extend are not limited thereto.

The inner frame portion 22a, the outer frame portion 22b, the first frame portion 22c, and the second frame portion 22d form multiple opening portions 22g. The opening portion 22g causes the inside of the damper apparatus 1 covered with the first disk plate 22 to be exposed.

As illustrated in Fig. 1, the first disk plate 22 and the second disk plate 23 are arranged side by side by leaving a gap therebetween in the axial direction of the rotation axis Ax. The first disk plate 22 and the second disk plate 23 are connected to each other by a first connection member 27 extending in the axial direction.

One end portion of the first connection member 27 is fixed to the first disk plate 22 by means of caulking, for example. The other end of the first connection member 27 is fixed to the second disk plate 23 by means of caulking, for example. The first connection member 27 restrains the first disk plate 22 and the second disk plate 23 from being relatively rotated. In this manner, the first disk plate 22 and the second disk plate 23 are integrally rotatable around the rotation axis Ax.

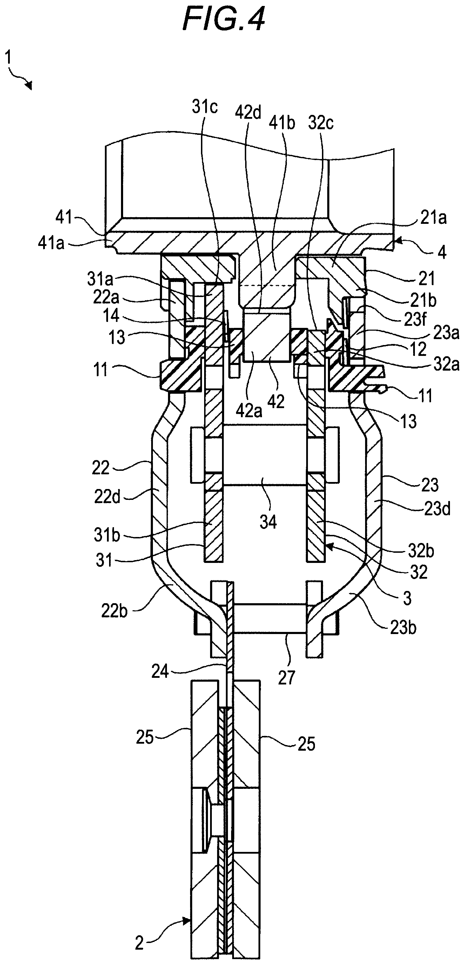

Similarly to the first disk plate 22, the second disk plate 23 has an inner frame portion 23a, an outer frame portion 23b, two first frame portions 23c, two second frame portions 23d (illustrated in Fig. 4), a fitting hole 23e, a spline portion 23f, and multiple opening portions 23g.

The inner frame portion 23a, the outer frame portion 23b, the first frame portions 23c, the second frame portions 23d, the fitting hole 23e, the spline portion 23f, and the opening portions 23g of the second disk plate 23 have substantially the same shape as the inner frame portion 22a, the outer frame portion 22b, the first frame portions 22c, the second frame portions 22d, the fitting hole 22e, the spline portion 22f, and the opening portions 22g of the first disk plate 22, but may have a different shape.

The inner frame portion 23a, the outer frame portion 23b, the first frame portions 23c, and the second frame portions 23d of the second disk plate 23 are arranged side by side with the inner frame portion 22a, the outer frame portion 22b, the first frame portions 22c, and the second frame portions 22d of the first disk plate 22 in the axial direction of the rotation axis Ax. The spline portion 23f of the second disk plate 23 and the spline portion 22f of the first disk plate 22 are deviated from each other in the circumferential direction of the rotation axis Ax, but may be coincident with each other.

The support plate 24 is a disk-shaped portion extending in the radial direction of the rotation axis Ax. The support plate 24 is formed in an annular shape which is larger than that of the outer frame portions 22b and 23b of the first and second disk plates 22 and 23.

For example, the inner peripheral portion of the support plate 24 is attached to the outer frame portion 22b of the first disk plate 22 by using the first connection member 27 or a screw. The support plate 24 projects from the outer frame portion 22b of the first disk plate 22 in the radial direction of the rotation axis Ax. The support plate 24 may be attached to other portions such as the second disk plate 23.

For example, the lining portion 25 is a disk-shaped portion extending in the radial direction of the rotation axis Ax. The lining portions 25 are formed in an annular shape surrounding the first and second disk plates 22 and 23 by leaving a gap therebetween.

The two lining portions 25 are respectively attached to both sides of the support plate 24 in the axial direction of the rotation axis Ax, in the outer peripheral portion of the support plate 24. In other words, the support plate 24 is arranged between the two lining portions 25 in the axial direction. The two lining portions 25 come into contact with the flywheel.

If the flywheel rotates, a friction force generated between the flywheel and the lining portion 25 rotates the drive plate 2. If torque acting on the damper apparatus 1 is excessively generated, slippage occurs between the lining portion 25 and the flywheel.

The intermediate plate 3 is arranged between the first disk plate 22 and the second disk plate 23 of the drive plate 2 in the axial direction of the rotation axis Ax. The intermediate plate 3 has a first plate 31 and a second plate 32. The first plate 31 is an example of a first wall portion. The second plate 32 is an example of a second wall portion.

The first plate 31 is arranged closer to the first disk plate 22 of the drive plate 2 than the second plate 32 in the axial direction of the rotation axis Ax. The second plate 32 is arranged closer to the second disk plate 23 of the drive plate 2 than the first plate 31.

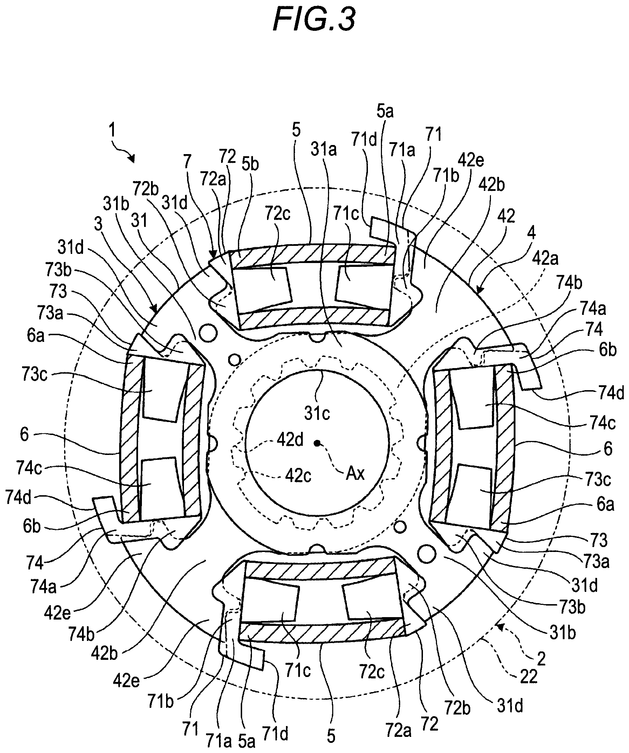

Fig. 3 is a front view illustrating the damper apparatus 1 by omitting the drive plate 2. In Fig. 3, the outer peripheral portion of the first disk plate 22 of the drive plate 2 is illustrated by a two-dot chain line. As illustrated in Fig. 3, the first plate 31 has an intermediate portion 31a and two arms 31b. The arm 31b is an example of a second extension portion. The number of the arms 31b is not limited to two.

The intermediate portion 31a is a disk-shaped portion extending in the radial direction of the rotation axis Ax. The intermediate portion 31a is formed in an annular shape which has an insertion hole 31c extending along the rotation axis Ax. The insertion hole 31c is an example of an opening portion.

As illustrated in Fig. 1, the boss portion 21a of the bush 21 of the drive plate 2 is fitted into the insertion hole 31c. The boss portion 21a fitted into the insertion hole 31c restrains the first plate 31 from moving in the radial direction of the rotation axis Ax. In other words, the boss portion 21a of the bush 21 arranges (centers) the first plate 31 so as to align with the rotation axis Ax. A gap for allowing the boss portion 21a and the first plate 31 to be rotatable around the rotation axis Ax is formed between the inner peripheral surface of the insertion hole 31c and the outer peripheral surface of the boss portion 21a.

As illustrated in Fig. 3, the two arms 31b extend from the intermediate portion 31a in the radial direction of the rotation axis Ax, and in directions opposite to each other. In Fig. 3, the two arms 31b extend upward to the left and downward to the right. The length from the rotation axis Ax to the outer peripheral surface of the arm 31b in the radial direction of the rotation axis Ax is shorter than the length from the rotation axis Ax to the outer peripheral surface of the outer frame portion 22b of the first disk plate 22.

Two projection portions 31d are disposed in a distal end portion of the arm 31b. The projection portion 31d is a portion projecting from the distal end portion of the arm 31b to both sides in the circumferential direction of the rotation axis Ax. In other words, the two projection portions 31d respectively project from the distal end portion of the arms 31b in directions opposite to each other in the circumferential direction of the rotation axis Ax.

Fig. 4 is a cross-sectional view partially illustrating the damper apparatus 1 located at a position different from that in Fig. 1. As illustrated in Fig. 4, the first plate 31 and the second plate 32 are arranged side by side by leaving a gap therebetween in the axial direction of the rotation axis Ax.

A second connection member 34 extending in the axial direction of the rotation axis Ax is attached to the first plate 31 and the second plate 32. The second connection member 34 is an example of a first fixing portion. The second connection member 34 connects the first plate 31 and the second plate 32 to each other.

For example, one end portion of the second connection member 34 is fixed to the first plate 31 by means of caulking. For example, the other end portion of the second connection member 34 is fixed to the second plate 32 by means of caulking. The second connection member 34 restrains the first plate 31 and the second plate 32 from being relatively rotated. In this manner, the first plate 31 and the second plate 32 are integrally rotatable around the rotation axis Ax.

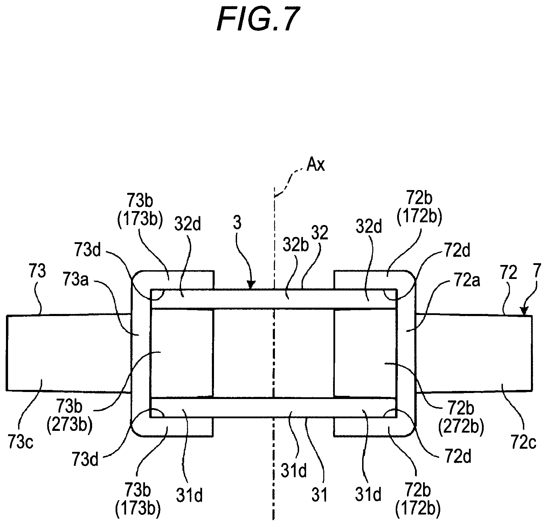

Similarly to the first plate 31, the second plate 32 has an intermediate portion 32a, two arms 32b, an insertion hole 32c, and two projection portions 32d (illustrated in Fig. 7). The intermediate portion 32a and the arms 32b of the second plate 32 have substantially the same shape as that of the intermediate portion 31a and the arms 31b of the first plate 31, but may have a different shape. The intermediate portion 32a and the arms 32b of the second plate 32 are arranged side by side with the intermediate portion 31a and the arms 31b of the first plate 31 in the axial direction of the rotation axis Ax.

For example, the driven plate 4 is connected to a transmission via an input shaft. Without being limited to the transmission, the driven plate 4 may be connected to other devices such as motors. As illustrated in Fig. 1, the driven plate 4 has an inner hub 41, an outer hub 42, and a spring 43.

The inner hub 41 has a boss portion 41a and multiple locking portions 41b. The boss portion 41a is a substantially cylindrical portion extending along the rotation axis Ax. An input shaft is fitted into the inner side of the boss portion 41a. For example, rotations are transmitted via a spline or a key between the boss portion 41a and the input shaft. The locking portions 41b are portions which respectively protrude from the outer peripheral surface of the boss portion 41a in the radial direction of the rotation axis Ax.

The boss portion 41a of the inner hub 41 is fitted into the inner side of the boss portion 21a of the bush 21 of the drive plate 2. A gap for allowing the boss portion 41a of the inner hub 41 and the boss portion 21a of the bush 21 to be relatively rotatable around the rotation axis Ax is formed between the outer peripheral surface of the boss portion 41a of the inner hub 41 and the inner peripheral surface of the boss portion 21a of the bush 21.

The two boss portions 21a of the bush 21 of the drive plate 2 are respectively arranged on both sides of the locking portion 41b of the inner hub 41 in the axial direction of the rotation axis AX. In other words, the locking portion 41b of the inner hub 41 is arranged in a gap between the two boss portions 21a of the bush 21.

The outer hub 42 is arranged between the first plate 31 and the second plate 32 of the intermediate plate 3 in the axial direction of the rotation axis Ax. Without being limited thereto, the outer hub 42 may be arranged on the outer side of the first and second plates 31 and 32.

As illustrated in Fig. 3, the outer hub 42 has an intermediate portion 42a and two arms 42b. Fig. 3 illustrates the driven plate 4 by omitting the inner hub 41 and the spring 43. The arm 42b is an example of a first extension portion. The number of the arms 42b is not limited to two.

The intermediate portion 42a is a disk-shaped portion extending in the radial direction of the rotation axis Ax. The intermediate portion 42a is formed in an annular shape which has the insertion hole 42c extending along the rotation axis Ax. The intermediate portion 42a further has a spline portion 42d formed by using multiple grooves extending from the inner peripheral surface of the insertion hole 42c in the radial direction.

The boss portion 41a of the inner hub 41 is fitted into the inner side of the insertion hole 42c of the outer hub 42. A gap for allowing the inner hub 41 and the outer hub 42 to be relatively rotatable around the rotation axis Ax is formed between the outer peripheral surface of the boss portion 41a of the inner hub 41 and the inner peripheral surface of the insertion hole 42c of the outer hub 42.

As illustrated in Fig. 1, the locking portion 41b of the inner hub 41 is fitted into the spline portion 42d of the outer hub 42. A gap is formed between an end portion of the spline portion 42d of the outer hub 42 and an end portion of the locking portion 41b of the inner hub 41 in the circumferential direction of the rotation axis Ax. In this manner, the inner hub 41 and the outer hub 42 are relatively rotatable at a predetermined angle.

If the inner hub 41 and the outer hub 42 relatively rotate at the predetermined angle, the end portion of the spline portion 42d of the outer hub 42 and the end portion of the locking portion 41b of the inner hub 41 come into contact with each other in the circumferential direction of the rotation axis Ax. In this manner, the inner hub 41 and the outer hub 42 are restrained from being further relatively rotated.

The spring 43 is a compression spring having a coil shape. The spring 43 is arranged in a gap between the end portion of the spline portion 42d of the outer hub 42 and the end portion of the locking portion 41b of the inner hub 41 in the circumferential direction of the rotation axis Ax. In other words, the spring 43 is interposed between the inner hub 41 and the outer hub 42 in the circumferential direction.

If the inner hub 41 and the outer hub 42 relatively rotate around the rotation axis Ax, the spring 43 is compressed by the end portion of the spline portion 42d of the outer hub 42 and the end portion of the locking portion 41b of the inner hub 41 in the circumferential direction of the rotation axis Ax. The spring 43 applies a force to the inner hub 41 and the outer hub 42 which relatively rotate to one direction around the rotation axis Ax so as to rotate in the opposite direction.

As illustrated in Fig. 3, the two arms 42b of the outer hub 42 respectively extend in direction opposite to each other, from the intermediate portion 42a in the radial direction of the rotation axis Ax. In Fig. 3, the two arms 42b extend upward to the right and downward to the left. The length from the rotation axis Ax to the outer peripheral surface of the arm 42b in the radial direction of the rotation axis Ax is shorter than the length from the rotation axis Ax to the outer peripheral surface of the outer frame portion 22b of the first disk plate 22.

As illustrated in Fig. 2, when an external force is not applied to the drive plate 2 and the driven plate 4, the arm 42b of the outer hub 42 overlaps the first frame portions 22c and 23c of the first and second disk plates 22 and 23 of the drive plate 2 in the axial direction of the rotation axis Ax. The positions of the arm 42b of the outer hub 42 and the first frame portions 22c and 23c of the first and second disk plates 22 and 23 are not limited thereto.

Two projection portions 42e are disposed in a distal end portion of the arm 42b. The projection portions 42e are portions which project from the distal end portion of the arm 42b to both sides in the circumferential direction of the rotation axis Ax. In other words, the two projection portions 42e project from the distal end portion of the arm 42b in directions opposite to each other in the circumferential direction of the rotation axis Ax.

In the circumferential direction of the rotation axis Ax, the width of the arm 42b of the outer hub 42 of the driven plate 4 is wider than the width of the arms 31b and 32b of the first and second plates 31 and 32 of the intermediate plate 3. The width of the arm 42b of the outer hub 42 and the width of the arms 31b and 32b of the first and second plates 31 and 32 in the circumferential direction of the rotation axis Ax are not limited to this configuration.

The damper apparatus 1 further has two first torsion springs 5, two second torsion springs 6, and a stopper mechanism 7. The first torsion spring 5 is an example of a first elastic portion and a first coil spring. The second torsion spring 6 is an example of a second elastic portion and a second coil spring. The number of the first torsion springs 5 and the second torsion springs 6 is not limited to two. Figs. 2 and 3 schematically illustrate a cross section of the first torsion spring 5 and the second torsion spring 6.

The first torsion spring 5 is a compression spring having a coil shape. The first torsion spring 5 is interposed between the arm 42b of the outer hub 42 of the driven plate 4 and the arms 31b and 32b of the first and second plates 31 and 32 of the intermediate plate 3 in the circumferential direction of the rotation axis Ax.

In addition, when an external force is not applied to the drive plate 2 and the driven plate 4, the first torsion spring 5 is also interposed between the first frame portions 22c and 23c of the first and second disk plates 22 and 23 of the drive plate 2 and the arms 31b and 32b of the first and second plates 31 and 32 of the intermediate plate 3.

The second torsion spring 6 is a compression spring having a coil shape. The second torsion spring 6 is interposed between the arms 31b and 32b of the first and second plates 31 and 32 of the intermediate plate 3 and the first frame portions 22c and 23c of the first and second disk plates 22 and 23 of the drive plate 2 in the circumferential direction of the rotation axis Ax.

In addition, when an external force is not applied to the drive plate 2 and the driven plate 4, the second torsion spring 6 is also interposed between the arm 42b of the outer hub 42 of the driven plate 4 and the arms 31b and 32b of the first and second plates 31 and 32 of the intermediate plate 3.

The length of the second torsion spring 6 is substantially the same as the length of the first torsion spring 5. The spring constant of the second torsion spring 6 is greater than the spring constant of the first torsion spring 5. The length and spring constant of the first and second springs 5 and 6 are not limited to this configuration.

The stopper mechanism 7 has two first seats 71, two second seats 72, two third seats 73, and two fourth seats 74. The first seat 71 is an example of a first stopper portion and a first support member. The second seat 72 is an example of a second stopper portion and a second support member. The third seat 73 is an example of a third stopper portion and a third support member. The fourth seat 74 is an example of a fourth stopper portion and a fourth support member. For example, the first to fourth seats 71 to 74 are produced by using synthetic resins. The material of the first to fourth seats 71 to 74 is not limited to this configuration.

The two first seats 71 are detachably supported by the two arms 42b of the outer hub 42 of the driven plate 4. The first seats 71 are supported by the projection portion 42e disposed in the arm 42b of the outer hub 42.

Concurrently, the two first seats 71 are also detachably supported by the two first frame portions 22c and 23c of the first and second disk plates 22 and 23 of the drive plate 2. The first seats 71 are supported by the first frame portions 22c and 23c of the first and second disk plates 22 and 23.

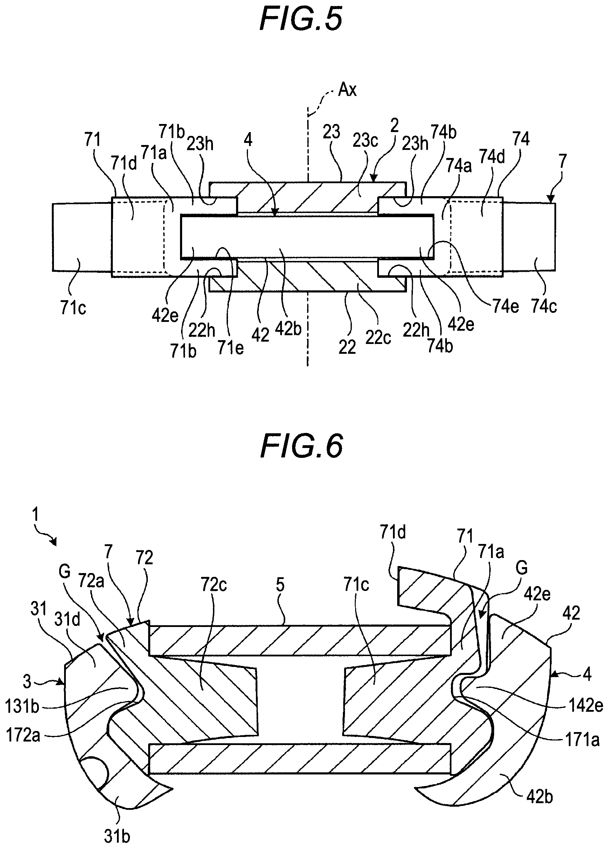

Fig. 5 is a top view schematically illustrating the drive plate 2, the driven plate 4, the first seat 71, and the fourth seat 74. Fig. 6 is a cross-sectional view illustrating the intermediate plate 3, the driven plate 4, the first seat 71, and the second seat 72. As illustrated in Fig. 5, the first seat 71 has a support wall 71a, two extension walls 71b, a convex portion 71c, and a covering portion 71d. The convex portion 71c is an example of a first convex portion.

The support wall 71a covers one end portion of the arm 42b of the outer hub 42 of the driven plate 4 in the circumferential direction of the rotation axis Ax. As illustrated in Fig. 3, the support wall 71a supports one end portion 5a of the first torsion spring 5.

As illustrated in Fig. 5, the two extension walls 71b respectively extend from the support wall 71a in the circumferential direction of the rotation axis Ax, and are arranged side by side by leaving a gap therebetween in the axial direction of the rotation axis Ax. The arm 42b of the outer hub 42 is arranged between the two extension walls 71b. Furthermore, the two extension walls 71b are arranged between the first frame portions 22c and 23c of the first and second disk plates 22 and 23 of the drive plate 2. In this manner, the arm 42b of the outer hub 42 and the first frame portions 22c and 23c of the first and second disk plates 22 and 23 restrain the first seat 71 from moving in the axial direction.

The support wall 71a and the two extension walls 71b form a concave portion 71e which is open in the circumferential direction of the rotation axis Ax. The projection portion 42e of the outer hub 42 is fitted into the concave portion 71e. In this manner, the first seat 71 is supported by the projection portion 42e of the outer hub 42.

As illustrated in Fig. 6, for example, a convex portion 142e disposed in the projection portion 42e of the outer hub 42 is inserted into a concave portion 171a disposed on the support wall 71a of the first seat 71. In this manner, the projection portion 42e of the outer hub 42 supports the first seat 71. A gap G is formed across the convex portion 142e and the concave portion 171a in at least any one on the inner side and the outer side in the radial direction of the rotation axis Ax. That is, in a state where the outer hub 42 supports the first seat 71, the gap (space) G is disposed between the outer hub 42 and the first seat 71. Since the gap G is disposed therebetween, the first seat 71 is swingable with respect to the outer hub 42.

Concave portions 22h and 23h which are open in the circumferential direction of the rotation axis Ax are respectively formed in the first frame portions 22c and 23c of the first and second disk plates 22 and 23 of the drive plate 2. The extension walls 71b of the first seat 71 are respectively fitted into the concave portions 22h and 23h. In this manner, the first seat 71 is swingably supported by the first frame portions 22c and 23c of the first and second disk plates 22 and 23.

As illustrated in Fig. 3, the convex portion 71c protrudes from the support wall 71a in the circumferential direction of the rotation axis Ax. The convex portion 71c is formed in a substantially cylindrical shape, but may be formed in any other shape. The convex portion 71c is inserted into the first torsion spring 5 from one end portion 5a of the first torsion spring 5. In other words, the convex portion 71c is arranged inside the first torsion spring 5.

The covering portion 71d extends from the support wall 71a in the circumferential direction of the rotation axis Ax. The covering portion 71d extends in the direction opposite to the two extension walls 71b. The covering portion 71d covers a portion of the first torsion spring 5 from the outer side in the radial direction of the rotation axis Ax.

The two second seats 72 are respectively supported by the two arms 31b and 32b of the first and second plates 31 and 32 of the intermediate plate 3. The second seats 72 are supported by the projection portions 31d and 32d disposed in the arms 31b and 32b of the first and second plates 31 and 32.

Fig. 7 is a top view schematically illustrating the intermediate plate 3, the second seat 72, and the third seat 73. As illustrated in Fig. 7, the second seat 72 has a support wall 72a, three extension walls 72b, and a convex portion 72c. The convex portion 72c is an example of a second convex portion.

The support wall 72a covers one end portion of the arms 31b and 32b of the first and second plates 31 and 32 of the intermediate plate 3 in the circumferential direction of the rotation axis Ax. As illustrated in Fig. 3, the support wall 72a supports the other end portion 5b of the first torsion spring 5.

As illustrated in Fig. 7, the three extension walls 72b have two outer extension walls 172b and one inner extension wall 272b. The outer extension walls 172b and the inner extension wall 272b respectively extend from the support wall 72a in the circumferential direction of the rotation axis Ax, and are arranged side by side by leaving a gap therebetween in the axial direction of the rotation axis Ax. The arms 31b and 32b of the first and second plates 31 and 32 of the intermediate plate 3 are respectively arranged between the two outer extension walls 172b. Furthermore, the one inner extension wall 272b is arranged between the arm 31b of the first plate 31 and the arm 32b of the second plate 32. In this manner, the arms 31b and 32b of the first and second plates 31 and 32 of the intermediate plate 3 restrain the second seat 72 from moving in the axial direction. Any one of the outer extension wall 172b and the inner extension wall 272b may be omitted.

The support wall 72a and the three extension walls 72b form a concave portion 72d which is open in the circumferential direction of the rotation axis Ax. That is, the concave portion 72d is formed between the outer extension wall 172b and the inner extension wall 272b. The projection portions 31d and 32d of the first and second plates 31 and 32 of the intermediate plate 3 are fitted into the concave portion 72d. In this manner, the second seat 72 is supported by the projection portions 31d and 32d of the first and second plates 31 and 32.

As illustrated in Fig. 6, for example, the convex portion 131d disposed in the projection portions 31d and 32d of the first and second plates 31 and 32 is inserted into the concave portion 172a disposed on the support wall 72a of the second seat 72. In this manner, the projection portions 31d and 32d of the first and second plates 31 and 32 support the second seat 72. The gap G is formed across the convex portion 131d and the concave portion 172a in at least any one on the inner side and the outer side in the radial direction of the rotation axis Ax. That is, in a state where the first and second plates 31 and 32 support the second seat 72, the gap (space) G is disposed between the first and second plates 31 and 32 and the second seat 72. Since the gap G is disposed therebetween, the second seat 72 is swingable with respect to the first and second plates 31 and 32.

As illustrated in Fig. 3, the convex portion 72c protrudes from the support wall 72a in the circumferential direction of the rotation axis Ax. The convex portion 72c of the second seat 72 protrudes toward the first seat 71 in the circumferential direction of the rotation axis Ax. Furthermore, the convex portion 71c of the first seat 71 protrudes toward the second seat 72.

The convex portion 72c is formed in a substantially cylindrical shape, but may be formed in any other shape. The convex portion 72c is inserted into the first torsion spring 5 from the other end portion 5b of the first torsion spring 5. In other words, the convex portion 72c is arranged inside the first torsion spring 5.

The two third seats 73 are respectively supported by the two arms 31b and 32b of the first and second plates 31 and 32 of the intermediate plate 3. The third seats 73 are supported by the projection portions 31d and 32d disposed in the arms 31b and 32b of the first and second plates 31 and 32.

The third seat 73 has a support wall 73a, three extension walls 73b, and a convex portion 73c. The convex portion 73c is an example of a third convex portion.

The support wall 73a covers the other end portion of the arms 31b and 32b of the first and second plates 31 and 32 of the intermediate plate 3 in the circumferential direction of the rotation axis Ax. The support wall 73a supports one end portion 6a of the second torsion spring 6.

As illustrated in Fig. 7, the three extension walls 73b have two outer extension walls 173b and one inner extension wall 273b. The outer extension walls 173b and the inner extension wall 273b respectively extend from the support wall 73a in the circumferential direction of the rotation axis Ax, and are arranged side by side by leaving a gap therebetween in the axial direction of the rotation axis Ax. The arms 31b and 32b of the first and second plates 31 and 32 of the intermediate plate 3 are arranged between the two outer extension walls 173b. Furthermore, the one inner extension wall 273b is arranged between the arm 31b of the first plate 31 and the arm 32b of the second plate 32. In this manner, the arms 31b and 32b of the first and second plates 31 and 32 of the intermediate plate 3 restrain the third seat 73 from moving in the axial direction. Any one of the outer extension wall 173b and the inner extension wall 273b may be omitted.

The support wall 73a and the three extension walls 73b form a concave portion 73d which is open in the circumferential direction of the rotation axis Ax. That is, the concave portion 73d is formed between the outer extension wall 173b and the inner extension wall 273b. The projection portions 31d and 32d of the first and second plates 31 and 32 of the intermediate plate 3 are fitted into the concave portion 73d. In this manner, the third seat 73 is swingably supported by the projection portions 31d and 32d of the first and second plates 31 and 32. Similarly to the second seat 72, in a state where the first and second plates 31 and 32 support the third seat 73, the gap G in which the third seat 73 is swingable is disposed between the first and second plates 31 and 32 and the third seat 73.

The second and third seats 72 and 73 are swingable around a portion in which the intermediate plate 3 supports the second and third seats 72 and 73, in a direction closer to the rotation axis Ax or in a direction farther from the rotation axis Ax. For example, the second and third seats 72 and 73 are swingable forward or rearward in Fig. 7.

As illustrated in Fig. 3, the convex portion 73c protrudes from the support wall 73a in the circumferential direction of the rotation axis Ax. The convex portion 73c is formed in a substantially cylindrical shape, but may be formed in any other shape. The convex portion 73c is inserted into the second torsion spring 6 from one end portion 6a of the second torsion spring 6. In other words, the convex portion 73c is arranged inside the second torsion spring 6.

As illustrated in Fig. 5, the two fourth seats 74 are detachably supported by the two first frame portions 22c and 23c of the first and second disk plates 22 and 23 of the drive plate 2. The fourth seats 74 are supported by the two first frame portions 22c and 23c of the first and second disk plates 22 and 23.

Concurrently, the two fourth seats 74 are also detachably supported by the two arms 42b of the outer hub 42 of the driven plate 4. The fourth seats 74 are also supported by the projection portion 42e disposed in the arm 42b of the outer hub 42.

The fourth seat 74 has a support wall 74a, two extension walls 74b, a convex portion 74c, and a covering portion 74d. The convex portion 74c is an example of a fourth convex portion.

The support wall 74a covers the other end of the arm 42b of the outer hub 42 of the driven plate 4 in the circumferential direction of the rotation axis Ax. As illustrated in Fig. 3, the support wall 74a supports the other end portion 6b of the second torsion spring 6.

As illustrated in Fig. 5, the two extension walls 74b respectively extend from the support wall 74a in the circumferential direction of the rotation axis Ax, and are arranged side by side by leaving a gap therebetween in the axial direction of the rotation axis Ax. The arm 42b of the outer hub 42 is arranged between the two extension walls 74b. Furthermore, the two extension walls 74b are arranged between the first frame portions 22c and 23c of the first and second disk plates 22 and 23 of the drive plate 2. In this manner, the arm 42b of the outer hub 42 and the first frame portions 22c and 23c of the first and second disk plates 22 and 23 restrain the fourth seat 74 from moving in the axial direction.

The support wall 74a and the two extension walls 74b form a concave portion 74e which is open in the circumferential direction of the rotation axis Ax. The projection portion 42e of the outer hub 42 is fitted into the concave portion 74e. In this manner, the fourth seat 74 is swingably supported by the projection portion 42e of the outer hub 42. Similarly to the first seat 71, in a state where the outer hub 42 supports the fourth seat 74, the gap G in which the fourth seat 74 is swingable is disposed between the outer hub 42 and the fourth seat 74.

The extension walls 74b of the fourth seat 74 are respectively fitted into the concave portions 22h and 23h formed in the drive plate 2. In this manner, the fourth seat 74 is swingably supported by the first frame portions 22c and 23c of the first and second disk plates 22 and 23.

The first and fourth seats 71 and 74 are swingable around a portion in which the driven plate 4 and the drive plate 2 support the first and fourth seats 71 and 74, in a direction closer to the rotation axis Ax or in a direction farther from the rotation axis Ax. For example, the first and fourth seats 71 and 74 are swingable forward or rearward in Fig. 5.

If the driven plate 4 and the drive plate 2 relatively rotate, the first and fourth seats 71 and 74 are supported by any one of the driven plate 4 and the drive plate 2. For example, if the driven plate 4 and the drive plate 2 relatively rotate, the driven plate 4 moves in the leftward direction in Fig. 5. In this case, the first seat 71 is supported by the driven plate 4, and is detached from the drive plate 2. On the other hand, the fourth seat 74 is supported by the drive plate 2, and is detached from the driven plate 4.

As illustrated in Fig. 3, the convex portion 74c protrudes from the support wall 74a in the circumferential direction of the rotation axis Ax. The convex portion 74c of the fourth seat 74 protrudes toward the third seat 73 in the circumferential direction of the rotation axis Ax. Furthermore, the convex portion 73c of the third seat 73 protrudes toward the fourth seat 74.

The convex portion 74c is formed in a substantially cylindrical shape, but may be formed in any other shape. The convex portion 74c is inserted into the second torsion spring 6 from the other end portion 6b of the second torsion spring 6. In other words, the convex portion 74c is arranged inside the second torsion spring 6.

The covering portion 74d extends from the support wall 74a in the circumferential direction of the rotation axis Ax. The covering portion 74d extends in a direction opposite to the two extension walls 74b. The covering portion 74d covers a portion of the second torsion spring 6 from the outside in the radial direction of the rotation axis Ax.

The first torsion spring 5 is interposed between the first seat 71 supported by the driven plate 4 and the drive plate 2 and the second seat 72 supported by the intermediate plate 3 in the circumferential direction of the rotation axis Ax. If the driven plate 4, the intermediate plate 3, and the drive plate 2 relatively rotate, the first torsion spring 5 supported by the first and second seats 71 and 72 is compressed or tensioned, thereby being elastically deformed.

If an angle between the intermediate plate 3 and the driven plate 4 around the rotation axis Ax decreases due to the relative rotation, the first torsion spring 5 is compressed. The compressed first torsion spring 5 presses the intermediate plate 3 and the driven plate 4 so as to increase the angle between the intermediate plate 3 and the driven plate 4.

The second torsion spring 6 is interposed between the third seat 73 supported by the intermediate plate 3 and the fourth seat 74 supported by the drive plate 2 and the driven plate4 in the circumferential direction of the rotation axis Ax. If the driven plate 4, the intermediate plate 3, and the drive plate 2 relatively rotate, the second torsion spring 6 supported by the third and fourth seats 73 and 74 is compressed or tensioned, thereby being elastically deformed.

If an angle between the drive plate 2 and the intermediate plate 3 around the rotation axis Ax decreases due to the relative rotation, the second torsion spring 6 is compressed. The compressed second torsion spring 6 presses the drive plate 2 and the intermediate plate 3 so as to increase the angle between the drive plate 2 and the intermediate plate 3.

When an external force is not applied to the drive plate 2 and the driven plate 4, the angle between the drive plate 2 and the intermediate plate 3 around the rotation axis Ax is maintained constant by the first and second tension springs 5 and 6 maintain. Similarly, the angle between the intermediate plate 3 and the driven plate 4 is maintained constant. In this case, the direction in which the arms 31b and 32b of the first and second plates 31 and 32 of the intermediate plate 3 extend and the direction in which the arm 42b of the outer hub 42 of the driven plate 4 extends are substantially orthogonal to each other. The directions in which the respective arms 31b, 32b, and 42b extend are not limited to this configuration.

The first torsion spring 5 presses the first seat 71 toward the drive plate 2 and the driven plate 4. In this manner, the first seat 71 is supported by at least any one of the drive plate 2 and the driven plate 4. Similarly, the first torsion spring 5 presses the second seat 72 toward the intermediate plate 3. In this manner, the second seat 72 is supported by the intermediate plate 3.

The first torsion spring 5 presses the first seat 71 and the second seat 72 which are swingable. In this manner, when an external force is not applied to the drive plate 2 and the driven plate 4, the support wall 71a of the first seat 71 and the support wall 72a of the second seat 72 are held so as to be substantially parallel to each other.

If the first and second disk plates 22 and 23 press the first torsion spring 5, the first torsion spring 5 is bent outward in a fan shape in the radial direction of the rotation axis Ax due to the reaction force. In other words, both end portions 5a and 5b of the first torsion spring 5 move along the circumferential direction of the first and second disk plates 22 and 23. Since the first torsion spring 5 is bent in this way, the length (stroke) of the first torsion spring 5 extends.

The first and second seats 71 and 72 swing in response to the bending of the first torsion spring 5. Therefore, an angle between the first seat 71 and the second seat 72 is variable. The covering portion 71d of the first seat 71 supports the bent first torsion spring 5.

The second torsion spring 6 presses the third seat 73 toward the intermediate plate 3. In this manner, the third seat 73 is supported by the intermediate plate 3. Similarly, the second torsion spring 6 presses the fourth seat 74 toward the drive plate 2 and the driven plate 4. In this manner, the fourth seat 74 is supported by at least any one of the drive plate 2 and the driven plate 4.

The second torsion spring 6 presses the third seat 73 and the fourth seat 74 which are swingable. In this manner, when an external force is not applied to the drive plate 2 and the driven plate 4, the support wall 73a of the third seat 73 and the support wall 74a of the fourth seat 74 are held so as to be substantially parallel to each other.

If the first and second plates 31 and 32 press the second torsion spring 6, the second torsion spring 6 is bent outward in a fan shape in the radial direction of the rotation axis Ax due to the reaction force. In other words, both end portions 6a and 6b of the second torsion spring 6 move along the circumferential direction of the first and second plates 31 and 32. Since the second torsion spring 6 is bent in this way, the length (stroke) of the second torsion spring 6 extends.

The third and fourth seats 73 and 74 swing in response to the bending of the second torsion spring 6. Therefore, an angle between the third seat 73 and the fourth seat 74 is variable. The covering portion 74d of the fourth seat 74 supports the bent second torsion spring 6.

As described above, the drive plate 2 of the damper apparatus 1 is connected to the crankshaft of the engine via the flywheel. The driven plate 4 is connected to the transmission via the input shaft. For example, torque transmitted to the flywheel by the engine being driven is transmitted from the drive plate 2 to the driven plate 4 through the fourth seat 74, the second torsion spring 6, the third seat 73, the intermediate plate 3, the second seat 72, the first torsion spring 5, and the first seat 72. The driven plate 4 transmits the torque to the transmission through the input shaft.

The rotation speed of the crankshaft of the engine varies in accordance with a driver's operation or strokes of the engine. Due to the variations in the rotation speed of the crankshaft, the rotation speed of the input shaft becomes faster than the rotation speed of the crankshaft in some cases. In this case, for example, the torque can be transmitted from the driven plate 4 to the drive plate 2 through the first seat 72, the first torsion spring 5, the second seat 72, the intermediate plate 3, the third seat 73, the second torsion spring 6, and the fourth seat 74.

In a torque transmission route between the drive plate 2 and the driven plate 4, the first torsion spring 5 and the second torsion spring 6 are connected in series. According to computation, the spring constant of two springs which are connected in series is a quarter of the spring constant of two springs which are connected in parallel. Therefore, torsional rigidity of the damper apparatus 1 in which the first torsion spring 5 and the second torsion spring 6 are connected in series can be lower than torsional rigidity obtained when the first torsion spring 5 and the second torsion spring 6 are connected in parallel.

As illustrated in Fig. 4, the damper apparatus 1 further has multiple first friction members 11, a first leaf spring 12, multiple second friction members 13, and a second leaf spring 14.

The multiple first friction members 11 are respectively attached to the first disk plate 22 and the second disk plate 23 of the drive plate 2. The first friction members 11 are interposed between the drive plate 2 and the intermediate plate 3 in the axial direction of the rotation axis Ax. The first friction members 11 generate a friction force between the intermediate plate 3 and the first friction members 11.

The first leaf spring 12 is interposed between the first friction member 11 and the second disk plate 23. The first leaf spring 12 presses the first friction member 11 toward the intermediate plate 3. The first leaf spring 12 increases the friction force between the first friction member 11 and the intermediate plate 3.

The multiple second friction members 13 are respectively attached to the first plate 31 and the second plate 32 of the intermediate plate 3. The second friction members 13 are interposed between the intermediate plate 3 and the driven plate 4 in the axial direction of the rotation axis Ax. The second friction members 13 generate a friction force between the driven plate 4 and the second friction members 13.

The second leaf spring 14 is interposed between the second friction member 13 and the first plate 31 of the intermediate plate 3. The second leaf spring 14 presses the second friction member 13 toward the driven plate 4. The second leaf spring 14 increases the friction force between the second friction member 13 and the driven plate 4.

Hereinafter, an example of an operation of the damper apparatus 1 configured as described above will be described. The operation of the damper apparatus 1 is not limited to the following description.

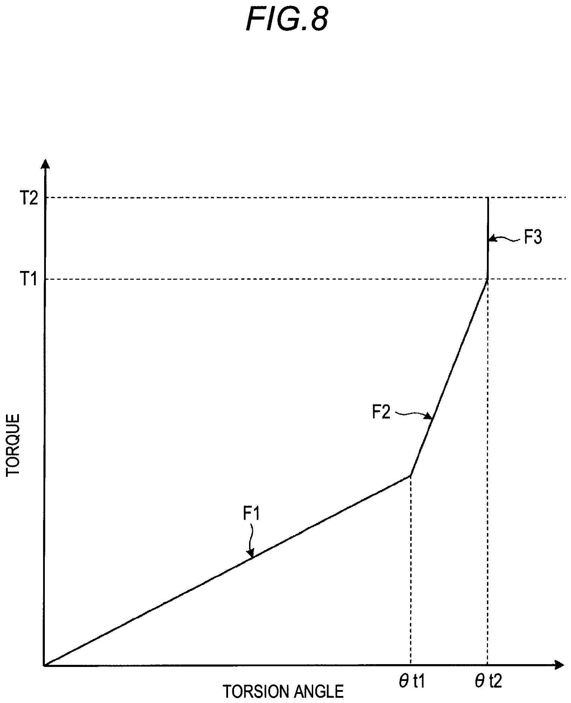

Fig. 8 is a graph illustrating an example of characteristics of the damper apparatus 1. In Fig. 8, the vertical axis represents torque acting on the damper apparatus 1. The horizontal axis represents a relative rotation angle (torsion angle) between the drive plate 2 and the driven plate 4 from a state where an external force is not applied to the drive plate 2 and the driven plate 4. That is, the graph in Fig. 8 illustrates the torsion angle between the drive plate 2 and the driven plate 4 with respect to the torque acting on the damper apparatus 1.

The inclination of the graph in Fig. 8 is proportional to torsional rigidity of the damper apparatus 1. That is, as the inclination of the graph is gentle, the torsional rigidity of the damper apparatus 1 is low. As the torsional rigidity of the damper apparatus 1 is high, the driven plate 4 is likely to rotate relative to the drive plate 2.

As illustrated in Fig. 8, the graph of the torsion angle with respect to the torque of the damper apparatus 1 has three regions of a series region F1, a parallel region F2, and a contact region F3 in accordance with the torsion angle. The natural angular frequencies of the damper apparatus 1 respectively vary in the series region F1, the parallel region F2, and the contact region F3. Without being limited thereto, the damper apparatus 1 may have any two regions only among the three regions.

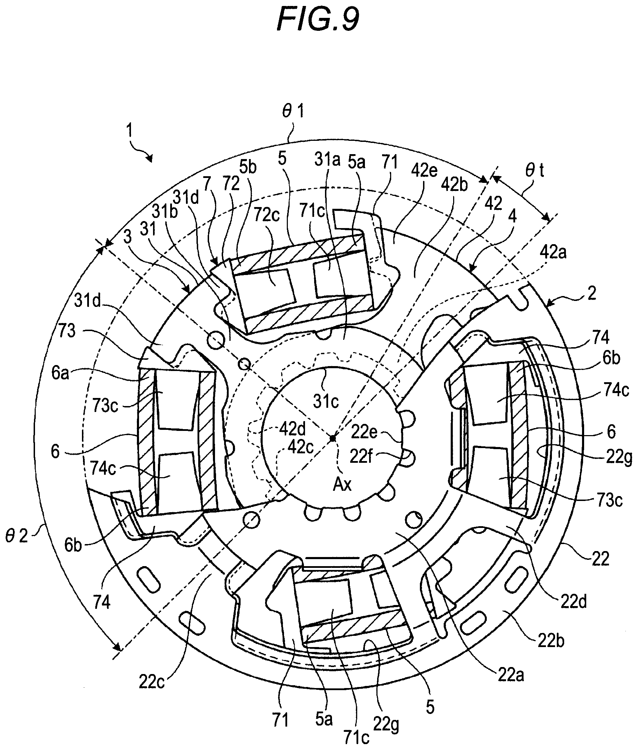

Fig. 9 is a front view illustrating the damper apparatus 1 in the series region F1. The series region F1 is a region where the first torsion spring 5 and the second torsion spring 6 which are connected in series attenuate rotational fluctuations of the engine. That is, in the series region F1, both the first torsion spring 5 and the second torsion spring 6 are expandable and contractable.

In the series region F1, if the torque acts on the damper apparatus 1, the drive plate 2, the intermediate plate 3, and the driven plate 4 rotate around the rotation axis Ax. That is, since the torque acts on the damper apparatus 1, a torsion angle θt is formed between the drive plate 2 and the driven plate 4.

As the torque increases, an angle θ1 decreases between the arms 31b and 32b of the first and second plates 31 and 32 of the intermediate plate 3 and the arm 42b of the outer hub 42 of the driven plate 4. Furthermore, as the torque increases, an angle θ2 decreases between the first frame portions 22c and 23c of the first and second disk plates 22 and 23 of the drive plate 2 and the arms 31b and 32b of the first and second plates 31 and 32 of the intermediate plate 3.

As illustrated in Fig. 8, if the torque acting on the damper apparatus 1 increases so that the torsion angle reaches a first contact torsion angle θt1, the damper apparatus 1 is changed from the series region F1 to the parallel region F2. The first contact torsion angle θt1 is an example of a first angle. The inclination of the graph of the torsion angle with respect to the torque in the parallel region F2 is steeper than the inclination of the graph of the torsion angle with respect to the torque in the series region F1. That is, the torsional rigidity of the damper apparatus 1 in the parallel region F2 is higher than the torsional rigidity of the damper apparatus 1 in the series region F1.

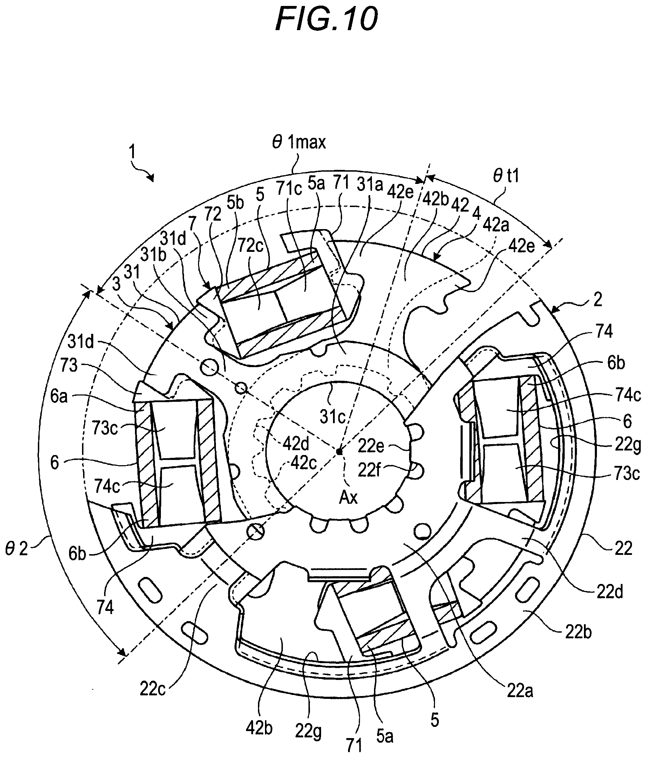

Fig. 10 is a front view illustrating the damper apparatus 1 in the parallel region F2. As illustrated in Fig. 10, if the torsion angle reaches the first contact torsion angle θt1, the angle θ1 between the intermediate plate 3 and the driven plate 4 reaches a first contact angle θ1max.

If the angle between the intermediate plate 3 and the driven plate 4 decreases to the first contact angle θ1max, the convex portion 71c of the first seat 71 comes into contact with the convex portion 72c of the second seat 72. The convex portion 71c of the first seat 71 comes into contact with the convex portion 72c of the second seat 72, thereby restraining the angle between the intermediate plate 3 and the driven plate 4 from becoming smaller than the first contact angle θ1max. In other words, the first and second seats 71 and 72 come into contact with each other, thereby restraining the first torsion spring 5 from contracting.

In this way, if the driven plate 4 rotates to one side in the rotation direction relative to the drive plate 2 at the first contact torsion angle θt1, the convex portion 71c of the first seat 71 comes into contact with the convex portion 72c of the second seat 72. In this manner, the first and second seats 71 and 72 restrain the driven plate 4 from rotating to one side in the rotation direction relative to the intermediate plate 3.

On the other hand, the convex portion 73c of the third seat 73 remains apart from the convex portion 74c of the fourth seat 74. Therefore, in the parallel region F2, the second torsion spring 6 is expandable and contractable.

As described above, in the parallel region F2, the first torsion spring 5 is restrained from contracting, and the second torsion spring 6 is expandable and contractable. That is, the parallel region F2 is a region where the two second torsion springs 6 which are connected in parallel attenuate rotational fluctuations of the engine.

When the angle between the intermediate plate 3 and the driven plate 4 decreases to the first contact angle θ1max, adjacent metal wires of the first torsion spring 5 which are wound in a coil shape remain apart from each other. That is, when the first and second seats 71 and 72 are absent, the first torsion spring 5 can be further compressed. The first and second seats 71 and 72 come into contact with each other, thereby excessively compressing the first torsion spring 5. In this manner, close contact limitation is prevented.

As illustrated in Fig. 8, the torque acting on the damper apparatus 1 increases so that the torsion angle reaches a second contact torsion angle θt2, the damper apparatus 1 is changed from the parallel region F2 to the contact region F3. The second contact torsion angle θt2 is an example of a second angle. The second contact torsion angle θt2 is larger than the first contact torsion angle θt1. In the contact region F3, the torsion angle stops increasing whereas the torque increases. That is, the torsional rigidity of the damper apparatus 1 in the contact region F3 is higher than the torsional rigidity of the damper apparatus 1 in the parallel region F2.

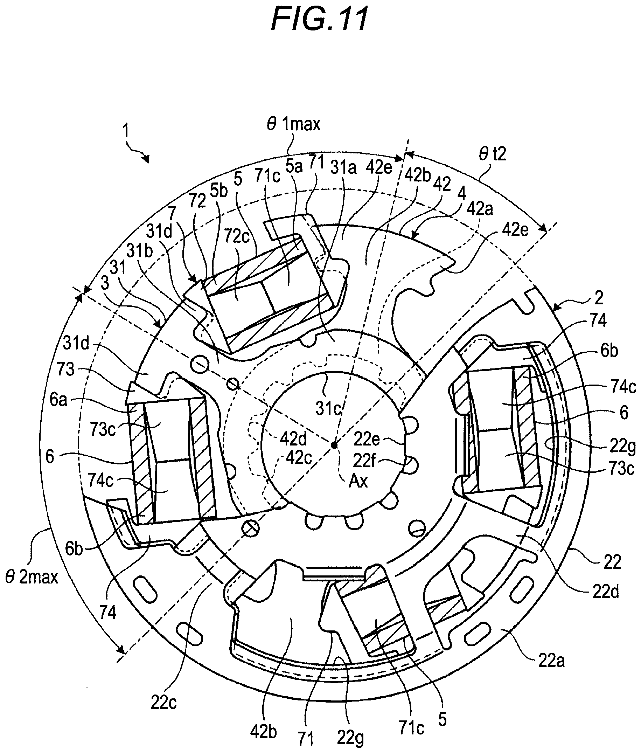

Fig. 11 is a front view illustrating the damper apparatus 1 in the contact region F3. As illustrated in Fig. 11, if the torsion angle reaches the second contact torsion angle θt2, the angle θ2 between the drive plate 2 and the intermediate plate 3 reaches a second contact angle θ2max.

If the angle between the drive plate 2 and the intermediate plate 3 decreases to the second contact angle θ2max, the convex portion 73c of the third seat 73 comes into contact with the convex portion 74c of the fourth seat 74. The convex portion 73c of the third seat 73 comes into contact with the convex portion 74c of the fourth seat 74, thereby restraining the angle between the drive plate 2 and the intermediate plate 3 from becoming smaller than the second contact angle θ2max. In other words, the third and fourth seats 73 and 74 come into contact with each other, thereby restraining the second torsion spring 6 from contracting.

In this way, if the driven plate 4 rotates to one side in the rotation direction relative to the drive plate 2 at the second contact torsion angle θt2, the convex portion 73c of the third seat 73 comes into contact with the convex portion 74c of the fourth seat 74. In this manner, the third and fourth seats 73 and 74 restrain the intermediate plate 3 from rotating to one side in the rotation direction relative to the drive plate 2.

In the contact region F3, the convex portion 71c of the first seat 71 also remains in contact with the convex portion 72c of the second seat 72. Therefore, in the contact region F3, the first torsion spring 5 is also restrained from contracting.

As described above, in the contact region F3, both the first torsion spring 5 and the second torsion spring 6 are restrained from contracting. That is, the contact region F3 is a region where the first and second torsion springs 5 and 6 do not attenuate rotational fluctuations of the engine.

The length of the convex portions 71c and 72c of the first and second seats 71 and 72 is shorter than the length of the convex portions 73c and 74c of the third and fourth seats 73 and 74. Therefore, the first contact angle θ1max is smaller than the second contact angle θ2max. In this manner, after the first and second seats 71 and 72 come into contact with each other, the third and fourth seats 73 and 74 come into contact with each other.

When the angle between the drive plate 2 and the intermediate plate 3 decreases to the second contact angle θ2max, adjacent metal wires of the second torsion spring 6 which are wound in a coil shape remain apart from each other. That is, when the third and fourth seats 73 and 74 are absent, the second torsion spring 6 can be further compressed. The third and fourth seats 73 and 74 come into contact with each other, thereby excessively compressing the second torsion spring 6. In this manner, close contact limitation is prevented.

As illustrated in Fig. 8, normal torque T1 and slip torque T2 are set in the damper apparatus 1. The normal torque T1 is the maximum torque when the rotation of the engine is in a normal area (for example, 6,000 rpm). The slip torque T2 is torque by which slip occurs between the lining portion 25 of the drive plate 2 and the flywheel. That is, if the torque increases to reach the slip torque T2, slip occurs between the lining portion 25 of the drive plate 2 and the flywheel. The slip torque T2 is greater than the normal torque T1.

The damper apparatus 1 is set so that the torsion angle becomes the second contact torsion angle θt2 when the torque reaches the normal torque T1. For example, the second contact torsion angle θt2 with respect to the torque can be adjusted by the length of the convex portions 71c to 74c of the first to fourth seats 71 to 74, or by the spring constant of the first and second torsion springs 5 and 6.

The damper apparatus 1 may be set so that the torsion angle becomes the second contact torsion angle θt2 after the torque reaches the normal torque T1. In this case, the damper apparatus 1 is set so that the torsion angle becomes the second contact torsion angle θt2 before the torque reaches the slip torque T2.

Furthermore, the damper apparatus 1 is set so that the torsion angle formed until the torsion angle reaches the first contact torsion angle θt1 from a state where an external force is not applied to the drive plate 2 and the driven plate 4 is larger than the torsion angle formed until the torsion angle reaches the second contact torsion angle θt2 from the first contact torsion angle θt1. That is, the first contact torsion angle θt1 is larger than a difference between the second contact torsion angle θt2 and the first contact torsion angle θt1.

In the damper apparatus 1 according to the first embodiment, it is possible to obtain a state where the first and second torsion springs 5 and 6 are interposed in series between the driven plate 4 and the drive plate 2 so that both the first and second torsion springs 5 and 6 are compressed. Accordingly, compared to a configuration in which one torsion spring is interposed between the driven plate 4 and the drive plate 2 or a configuration in which multiple torsion springs are interposed in parallel therebetween, it is easy to set the torsional rigidity of the damper apparatus 1 to be lower. In addition, compared to a configuration in which one long torsion spring is interposed between the driven plate 4 and the drive plate 2 without disposing the intermediate plate 3, it is easy to prevent the first and second torsion springs 5 and 6 from buckling.

Furthermore, in a state where the driven plate 4 rotates to one side in the rotation direction relative to the drive plate 2 at the first contact torsion angle θt1, the first and second seats 71 and 72 come into contact with each other so as to restrain the driven plate 4 from rotating to one side in the rotation direction relative to the intermediate plate 3. In addition, in a state where the driven plate 4 rotates to one side in the rotation direction relative to the drive plate 2 at the second contact torsion angle θt2, the third and fourth seats 73 and 74 come into contact with each other so as to restrain the intermediate plate 3 from rotating to one side in the rotation direction relative to the drive plate 2. Therefore, compared to a configuration in which close contact limitation of a coil spring restrains an angle range of two rotors, it is easy to prevent the first and second torsion springs 5 and 6 from being damaged. In addition, compared to a configuration in which the rigidity of the coil spring is set to be high so that the coil spring is not subjected to the close contact limitation, it is easy to set the torsional rigidity of the damper apparatus 1 to be lower.

The first to fourth seats 71 to 74 restrain the relative rotation of the drive plate 2, the intermediate plate 3, and the driven plate 4, and support the end portions 5a, 5b, 6a, and 6b of the first and second torsion springs 5 and 6. In this manner, the number of components in the damper apparatus 1 is prevented from increasing, thereby enabling the damper apparatus 1 to be further miniaturized.

The first to fourth seats 71 to 74 respectively and swingably support the drive plate 2, the intermediate plate 3, and the driven plate 4 which correspond thereto, and respectively support the first and second torsion springs 5 and 6 which correspond thereto. When the first to fourth seats 71 to 74 are present between the drive plate 2, the intermediate plate 3, and the driven plate 4 which correspond to the first and second torsion springs 5 and 6 so as to swingably support the stopper portion, a space is formed in which the stopper portion is movable along the circumferential direction of the rotor. Therefore, it is possible to widen a region where the stopper is movable.

The first and second torsion springs 5 and 6 are coil springs. The first to fourth seats 71 to 74 are arranged inside the first and second torsion springs 5 and 6, and have the first to fourth convex portions 71c to 74c which restrain the relative rotation of the drive plate 2, the intermediate plate 3, and the driven plate 4. In this manner, the first to fourth seats 71 to 74 can be further miniaturized.

The first contact torsion angle θt1 and the second contact torsion angle θt2 are different from each other. Therefore, the torsion angle θt between the driven plate 4 and the drive plate 2 which is formed by the torque acting on the damper apparatus 1 changes the damper apparatus 1 into a state where the first torsion spring 5 and the second torsion spring 6 which are connected in series generate the torsional rigidity of the damper apparatus 1 (series region F1), into a state where the second torsion spring 6 generates the torsional rigidity of the damper apparatus 1 (parallel region F2), and into a state where the drive plate 2, the intermediate plate 3, and the driven plate 4 whose relative rotations are restrained by the first to fourth seats 71 to 74 generate the torsional rigidity of the damper apparatus 1 (contact region F3). That is, the natural angular frequencies can be set in multiple types of torsion directions. The rotational fluctuations are more likely to be attenuated by combining these multiple torsional rigidities. Furthermore, the respective torsional rigidities can be allocated within a predetermined torsion angle range by adjusting the multiple torsional rigidities. Therefore, compared to a case of a single torsional rigidity, desired torque capacity can be ensured.

The first to fourth seats 71 to 74 are produced by using synthetic resins. In this manner, for example, compared to a configuration using metal materials, it is easy to prevent friction or noise of the first to fourth seats 71 to 74.

The intermediate plate 3 has the first plate 31 and the second plate 32 which are arranged on both sides of the driven plate 4 in the axial direction of the rotation axis Ax. The first torsion spring 5 is interposed between the intermediate plate 3 and the driven plate 4, and is compressed by the intermediate plate 3 and the driven plate 4. When the first torsion spring 5 is compressed, applying a force to a central portion in cross section is more advantageous than applying a force to a biased position in view of performance and durability.

For example, a method for applying the force to the central portion in cross section of the first torsion spring 5 includes a method of bending at least any one of the intermediate plate 3 and the driven plate 4 in the axial direction of the rotation axis Ax so that a position where the intermediate plate 3 presses the first torsion spring 5 is coincident with a position where the driven plate 4 presses the first torsion spring 5 in the axial direction of the rotation axis Ax. However, if at least any of the intermediate plate 3 and the driven plate 4 is bent, the durability of the bent portion is likely to become poor due to the influence of the centrifugal force, for example. If the thickness of the intermediate plate 3 and the driven plate 4 increases in order to prevent the durability from becoming poor, a size of the damper apparatus 1 in the axial direction of the rotation axis Ax increases.

On the other hand, as in the damper apparatus 1 according to the present embodiment, the intermediate plate 3 has the first and second plates 31 and 32, and the driven plate 4 is arranged between the first and second plates 31 and 32 in the axial direction of the rotation axis Ax. In this manner, the driven plate 4 can apply the force to the central portion in cross section of the first torsion spring 5. Furthermore, the first and second plates 31 and 32 can apply the force to the first torsion spring 5 in a well-balanced manner. According to this structure, it is not necessary to bend at least any one of the intermediate plate 3 and the driven plate 4. In this manner, it is possible to prevent poor rigidity of the intermediate plate 3 and a size increase in the damper apparatus 1.

The first plate 31 is rotatable around the rotation axis Ax integrally with the second plate 32. Therefore, compared to a case where the first plate 31 and the second plate 32 are not integrated with each other, it is possible to more stably apply the force to the first and second torsion springs 5 and 6 so as to be elastically deformed. In this manner, it is possible to further stabilize the performance of the damper apparatus 1.

The second connection member 34 is attached to the first plate 31 and the second plate 32, thereby restraining the first plate 31 and the second plate 32 from relatively rotating. In this manner, the first plate 31 and the second plate 32 are integrally rotatable around the rotation axis Ax. Therefore, it is possible to further stabilize the performance of the damper apparatus 1.

The first and second plates 31 and 32 restrain the second and third seats 72 and 73 from moving along the axial direction of the rotation axis Ax. Therefore, the second and third seats 72 and 73 are prevented from being misaligned with each other in the axial direction of the rotation axis Ax. In this manner, it is possible to further stabilize the performance of the damper apparatus 1 by preventing a change in the position or the posture of the first and second torsion springs 5 and 6.

The boss portion 21a of the bush 21 is attached to the intermediate plate 3, thereby restraining the intermediate plate 3 from moving in the radial direction of the rotation axis Ax. In this manner, it is possible to further stabilize the performance of the damper apparatus 1 by preventing a change in the position where the drive plate 2 applies a compression force or a tensile force to the first and second torsion springs 5 and 6 in the radial direction of the rotation axis Ax.

The boss portion 21a of the bush 21 which extends along the rotation axis Ax is arranged inside the insertion holes 31c and 32c disposed in the intermediate plate 3, thereby restraining the intermediate plate 3 from moving in the radial direction of the rotation axis Ax. In this manner, a relatively simple configuration prevents the intermediate plate 3 from moving in the radial direction of the rotation axis Ax.

The width of the arm 42b of the driven plate 4 is different from the width of the arms 31b and 32b of the intermediate plate 3 in the circumferential direction of the rotation axis Ax. In accordance with the width of the arms 31b, 32b, and 42b in the circumferential direction of the rotation axis Ax, it is possible to further lengthen or shorten the length of the first torsion spring 5. In this manner, it is possible to more easily set the torsional rigidity of the damper apparatus 1 in accordance with conditions.

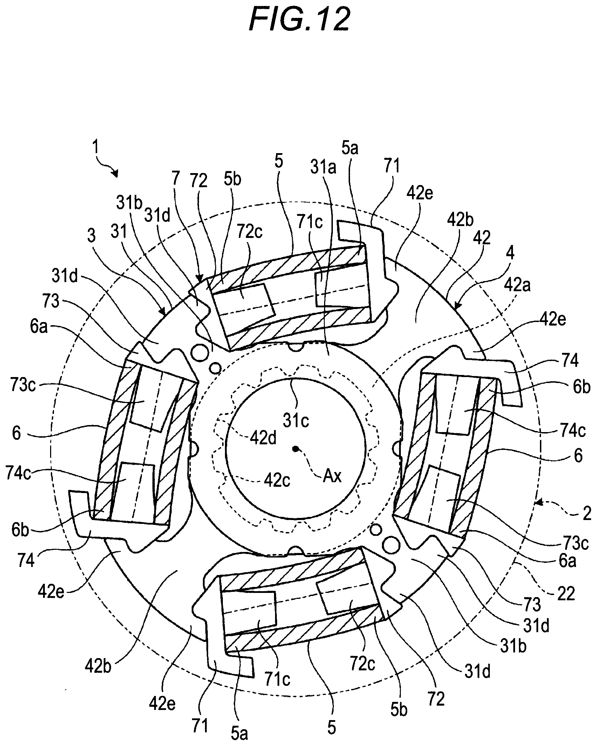

Hereinafter, a second embodiment will be described with reference to Fig. 12. In the following description for multiple embodiments, the same reference numerals will be given to the previously described configuration elements and configuration elements having the same functions. Furthermore, in some cases, description thereof will be omitted. In addition, in the multiple configuration elements having the same reference numerals, all functions and properties are not necessarily in common. The configuration elements may have different functions and properties in accordance with each embodiment.

Fig. 12 is a front view illustrating the damper apparatus 1 according to the second embodiment. As illustrated in Fig. 12, the length of the arms 31b and 32b of the first and second plates 31 and 32 of the intermediate plate 3 is shorter than the length of the arm 42b of the outer hub 42 of the driven plate 4 in the radial direction of the rotation axis Ax.

The direction in which the first torsion spring 5 extends tilts in the circumferential direction of the rotation axis Ax. The direction in which the second torsion spring 6 extends also tilts in the circumferential direction of the rotation axis Ax.

In the damper apparatus 1 according to the second embodiment, the length of the arm 42b of the driven plate 4 is different from the length of the arms 31b and 32b of the intermediate plate 3 in the radial direction of the rotation axis Ax. In accordance with the length of the arms 31b, 32b, and 42b in the radial direction of the rotation axis Ax, the length of the first torsion spring 5 can be further lengthened or shortened. In this manner, it is possible to more easily set the torsional rigidity of the damper apparatus 1 in accordance with conditions.

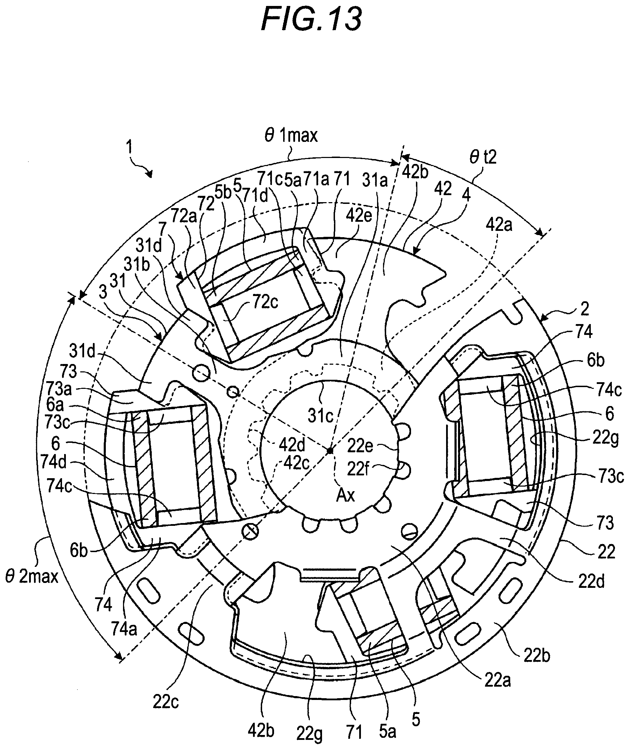

Hereinafter, a third embodiment will be described with reference to Fig. 13. Fig. 13 is a front view illustrating the damper apparatus 1 according to the third embodiment. As illustrated in Fig. 13, the length of the covering portions 71d and 74d of the first and fourth seats 71 and 74 is longer than the length of the convex portions 71c and 74c in the circumferential direction of the rotation axis Ax.

If the driven plate 4 rotates to one side in the rotation direction relative to the drive plate 2 at the first contact torsion angle θt1, the covering portion 71d of the first seat 71 comes into contact with the support wall 72a of the second seat 72. The covering portion 71d of the first seat 71 comes into contact with the support wall 72a of the second seat 72, thereby restraining the driven plate 4 from rotating to one side in the rotation direction relative to the intermediate plate 3.

If the driven plate 4 rotates to one side in the rotation direction relative to the drive plate 2 at the second contact torsion angle θt2, the covering portion 74d of the fourth seat 74 comes into contact with the support wall 73a of the third seat 73. The covering portion 74d of the fourth seat 74 comes into contact with the support wall 73a of the third seat 73, thereby restraining the intermediate plate 3 from rotating to one side in the rotation direction relative to the drive plate 2.

As in the third embodiment described above, without being limited to the convex portions 71c to 74c, other portions of the first to fourth seats 71 to 74 such as the covering portions 71d and 74d and the support walls 72a and 73a may restrain the relative rotation of the drive plate 2, the intermediate plate 3, and the driven plate 4.

Hitherto, a case has been described where the drive plate 2, the intermediate plate 3, and the driven plate 4 relatively rotate to one side in the rotation direction. However, even in a case where the drive plate 2, the intermediate plate 3, and the driven plate 4 relatively rotate to the other side in the rotation direction, the damper apparatus 1 achieves the same operation and advantageous effect.

The above-described embodiments according to this disclosure do not limit the scope of this disclosure, and are merely examples included in the scope of this disclosure. For example, in the embodiments according to this disclosure, at least some of specific uses, structures, shapes, operations, and advantageous effects may be modified, omitted, and added for the above-described embodiments within the scope not departing from the gist of this disclosure.

For example, the first and second elastic portions are not limited to the first and second torsion springs 5 and 6. For example, the first and second elastic portions may be various members such as synthetic rubber which is elastically deformable.

Hereinafter, the damper apparatus according to the embodiment will be additionally described. The above-described first to fourth stopper portions are produced by using synthetic resin materials in the damper apparatus in the embodiment. Therefore, according to the damper apparatus of the embodiment, compared to a configuration using metal materials, it is easy to prevent friction or noise of the first to fourth stopper portions.

According to the above-described damper apparatus, the third rotor has the first wall portion and the second wall portion which are arranged side by side in the rotation axis direction. The first rotor is arranged between the first wall portion and the second wall portion in the rotation axis direction.

The first elastic portion is interposed between the first rotor and the third rotor, and is compressed by the first and third rotors. When the first elastic portion is compressed, applying a force to a central portion in cross section is more advantageous than applying a force to a biased position in view of performance and durability.

For example, a method for applying the force to the central portion in cross section of the first elastic portion includes a method of bending at least any one of the first and third rotors in the rotation axis direction so that a position where the first rotor presses the first elastic portion is coincident with a position where the third rotor presses the first elastic portion in the rotation axis direction. However, if at least any of the first and third rotors is bent, the durability of the bent portion is likely to become poor due to the influence of the centrifugal force, for example. If the thickness of the rotors increases in order to prevent the durability from becoming poor, a size of the damper apparatus 1 in the rotation axis direction increases.

On the other hand, as in the above-described damper apparatus, the third rotor has the first and second wall portions, and the first rotor is arranged between the first and second wall portions in the rotation axis direction. In this manner, the first rotor can apply the force to the central portion in cross section of the first elastic portion. Furthermore, the first and second wall portions can apply the force to the first elastic portion in a well-balanced manner. According to this structure, it is not necessary to bend at least any one of the first and third rotors. Therefore, according to the damper apparatus of the embodiment, it is possible to prevent poor rigidity of the third rotor and a size increase in the damper apparatus.

In the above-described damper apparatus, the first wall portion is rotatable around the rotation center integrally with the second wall portion. Therefore, according to the damper apparatus of the embodiment, compared to a case where the first wall portion and the second wall portion are not integrated with each other, it is possible to more stably apply the force to the first and second elastic portions so as to be elastically deformed. In this manner, it is possible to further stabilize the performance of the damper apparatus.

In the above-described damper apparatus, the first fixing portion is attached to the first wall portion and the second wall portion. Accordingly, the first wall portion and the second wall portion are restrained from relatively rotating. Therefore, according to the damper apparatus of the embodiment, the first wall portion and the second wall portion are integrally rotatable around the rotation center, and it is possible to further stabilize the performance of the damper apparatus.

In the above-described damper apparatus, the first wall portion and the second wall portion restrain the second and third support members from moving along the rotation axis direction. Therefore, according of the damper apparatus of the embodiment, the second support member and the third support member are prevented from being misaligned with each other in the rotation axis direction. In this manner, it is possible to further stabilize the performance of the damper apparatus 1 by preventing a change in the position or the posture of the first and second elastic portions.

The above-described damper apparatus further includes the second fixing portion which is attached to the third rotor, and which restrains the third rotor from moving in the radial direction of the first rotor. Therefore, according of the damper apparatus of the embodiment, it is possible to further stabilize the performance of the damper apparatus by preventing the position where the second rotor applies a compression force or a tensile force to the first and second elastic portions from being changed in the radial direction of first rotor.

In the above-described damper apparatus, the third rotor has the opening portion extending along the rotation center. The second fixing portion extends along the rotation center, and is arranged inside the opening portion, thereby restraining the third rotor from moving in the radial direction of the first rotor. Therefore, according of the damper apparatus of the embodiment, a relatively simple configuration prevents the third rotor from moving in the radial direction of the first rotor.

In the above-described damper apparatus, the first rotor has the first extension portion extending in the radial direction of the first rotor. The third rotor has the second extension portion extending in the radial direction of the first rotor. The first elastic portion is interposed between the first extension portion and the second extension portion. The width of the first extension portion in the circumferential direction of the first rotor is different from the width of the second extension portion in the circumferential direction of the first rotor. Therefore, according of the damper apparatus of the embodiment, in accordance with the width of the first and second extension portions in the circumferential direction of the first rotor, the length of the first elastic portion can be further lengthened or shortened. In this manner, it is possible to more easily set the torsional rigidity of the damper apparatus in accordance with conditions.

In the above-described damper apparatus, the first rotor has the first extension portion extending in the radial direction of the first rotor. The third rotor has the second extension portion extending in the radial direction of the first rotor. The first elastic portion is interposed between the first extension portion and the second extension portion. The length of the first extension portion in the radial direction of the first rotor is different from the length of the second extension portion in the radial direction of the first rotor. Therefore, according of the damper apparatus of the embodiment, in accordance with the length of the first and second extension portions in the radial direction of the first rotor, the length of the first elastic portion can be further lengthened or shortened. In this manner, it is possible to more easily set the torsional rigidity of the damper apparatus in accordance with conditions.

In the above-described damper apparatus, in a state where the first support member is supported by the first rotor, a space where the first support member is swingable with respect to the first rotor is formed between the first support member and the first rotor. In a state where the second support member is supported by the third rotor, a space where the second support member is swingable with respect to the third rotor is formed between the second support member and the third rotor. In a state where the third support member is supported by the third rotor, a space where the third support member is swingable with respect to the third rotor is formed between the third support member and the third rotor. In a state where the fourth support member is supported by the second rotor, a space where the fourth support member is swingable with respect to the second rotor is formed between the fourth support member and the second rotor. Therefore, according of the damper apparatus of the embodiment, the first and second elastic portions can be bent in a fan shape, outward in the radial direction of the first rotor, and the length (stroke) of the first and second elastic portions extends.
The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the scope of the present invention as defined in the claims. Accordingly, it is expressly intended that all such variations, changes and equivalents which fall within the scope of the present invention as defined in the claims, be embraced thereby.

## Claims

1. A damper apparatus (1) comprising:
a first rotor (4) that is rotatable around a rotation center (Ax);
a second rotor (2) that is rotatable around the rotation center (Ax);
a third rotor (3) that is interposed between the first rotor (4) and the second rotor (2), and that is rotatable around the rotation center (Ax);
a first elastic portion (5) that is interposed between the first rotor (4) and the third rotor (3), and that is elastically compressed by the first rotor (4) rotating to one side in a rotation direction relative to the third rotor (3);
a second elastic portion (6) that is interposed between the third rotor (3) and the second rotor (2), and that is elastically compressed by the third rotor (3) rotating to one side in the rotation direction relative to the second rotor (2);
a first stopper portion (71) that is disposed in the first rotor (4);
a second stopper portion (72) that is disposed in the third rotor (3), and that restrains the first rotor (4) by coming into contact with the first stopper portion (71) in a state where the first rotor (4) rotates at a first angle (θt1) to one side in the rotation direction relative to the second rotor (2), and from rotating to one side in the rotation direction relative to the third rotor (3);
a third stopper portion (73) that is disposed in the third rotor (3); and
a fourth stopper portion (74) that is disposed in the second rotor (2), and that restrains the third rotor (3) by coming into contact with the third stopper portion (73) in a state where the first rotor (4) rotates at a second angle (θt2) to one side in the rotation direction relative to the second rotor (2), and from rotating to one side in the rotation direction relative to the second rotor (2), **characterized in that** the first elastic portion (5) and the second elastic portion (6) are disposed in series between the first rotor (4) and the second rotor (2) in a circumferential direction of the rotation center (Ax).

2. The damper apparatus (1) according to claim 1,
wherein the first stopper portion (71) supports one end portion of the first elastic portion
wherein the second stopper portion (72) supports the other end portion of the first elastic portion (5),
wherein the third stopper portion (73) supports one end portion of the second elastic portion (6), and
wherein the fourth stopper portion (74) supports the other end portion of the second elastic portion (6).

3. The damper apparatus (1) according to claims 1 or 2,
wherein the first stopper portion (71) includes a first support member (71) which is swingably supported by the first rotor (4), and which supports one end portion of the first elastic portion (5),
wherein the second stopper (72) portion includes a second support member (72) which is swingably supported by the third rotor (3); which supports the other end portion of the first elastic portion (5), and which restrains the first rotor (4) by coming into contact with the first support member (71) in a state where the first rotor (4) rotates at the first angle (θt1) to one side in the rotation direction relative to the second rotor (2), and from rotating to one side in the rotation direction relative to the third rotor (3),
wherein the third stopper portion (73) includes a third support member (73) which is swingably supported by the third rotor (3), and which supports one end portion of the second elastic portion (6), and
wherein the fourth stopper portion (74) includes a fourth support member (74) which is swingably supported by the second rotor (2), which supports the other end portion of the second elastic portion (6), and which restrains the third rotor (3) by coming into contact with the third support member (3) in a state where the first rotor (4) rotates at the second angle (θt2) to one side in the rotation direction relative to the second rotor (2), and from rotating to one side in the rotation direction relative to the second rotor (2).

4. The damper apparatus (1) according to any one of claims 1 to 3,
wherein the first elastic portion (5) includes a first coil spring (5),
wherein the first stopper portion (71) includes a first convex portion (71c) which is arranged inside the first coil spring (5),
wherein the second stopper portion (72) includes a second convex portion (72c) which is arranged inside the first coil spring (5), and which restrains the first rotor (4) by coming into contact with the first convex portion (71c) in a state where the first rotor (4) rotates at the first angle (θt1) to one side in the rotation direction relative to the second rotor (2), and from rotating to one side in the rotation direction relative to the third rotor (3),
wherein the second elastic portion (6) includes a second coil spring (6),
wherein the third stopper portion (73) includes a third convex portion (73c) which is arranged inside the second coil spring (6), and
wherein the fourth stopper portion (74) includes a fourth convex portion (74c) which is arranged inside the second coil spring (6), and which restrains the third rotor (3) by coming into contact with the third convex portion (73c) in a state where the first rotor (4) rotates at the second angle (θt2) to one side in the rotation direction relative to the second rotor (2), and from rotating to one side in the rotation direction relative to the second rotor (2).

5. The damper apparatus (1) according to any one of claims 1 to 4,
wherein the first angle (θt1) and the second angle (θ12) are different from each other.

## Patentansprüche

1. Dämpfervorrichtung (1) mit:
einem ersten Rotor (4), der um ein Drehzentrum (Ax) drehbar ist;
einem zweiten Rotor (2), der um das Drehzentrum (Ax) drehbar ist;
einem dritten Rotor (3), der zwischen dem ersten Rotor (4) und dem zweiten Rotor (2) angeordnet ist und der um das Drehzentrum (Ax) drehbar ist;
einem ersten elastischen Abschnitt (5), der zwischen dem ersten Rotor (4) und dem dritten Rotor (3) angeordnet ist und der durch den ersten Rotor (4), der sich bezüglich des dritten Rotors (3) zu einer Seite in einer Drehrichtung dreht, elastisch komprimiert wird;
einem zweiten elastischen Abschnitt (6), der zwischen dem dritten Rotor (3) und dem zweiten Rotor (2) angeordnet ist und der durch den dritten Rotor (3), der sich bezüglich des zweiten Rotors (2) zu einer Seite in der Drehrichtung dreht, elastisch komprimiert wird;
einem ersten Stopperabschnitt (71), der in dem ersten Rotor (4) angeordnet ist;
einem zweiten Stopperabschnitt (72), der in dem dritten Rotor (3) angeordnet ist und der den ersten Rotor (4) durch in Kontakt kommen mit dem ersten Stopperabschnitt (71) in einem Zustand, in dem sich der erste Rotor (4) bezüglich des zweiten Rotors (2) einen ersten Winkel (θt1) zu einer Seite in der Drehrichtung dreht, zurückhält und daran hindert, sich bezüglich des dritten Rotors (3) zu einer Seite in der Drehrichtung zu drehen;
einem dritten Stopperabschnitt (73), der in dem dritten Rotor (3) angeordnet ist; und
einem vierten Stopperabschnitt (74), der in dem zweiten Rotor (2) angeordnet ist und der den dritten Rotor (3) durch in Kontakt kommen mit dem dritten Stopperabschnitt (73) in einem Zustand, in dem sich der erste Rotor (4) bezüglich des zweiten Rotors (2) einen zweiten Winkel (θt2) zu einer Seite in der Drehrichtung dreht, zurückhält und daran hindert, sich bezüglich des zweiten Rotors (2) zu einer Seite in der Drehrichtung zu drehen, **dadurch gekennzeichnet, dass** der erste elastische Abschnitt (5) und der zweite elastische Abschnitt (6) in einer Umfangsrichtung des Drehzentrums (Ax) in Reihe zwischen dem ersten Rotor (4) und dem zweiten Rotor (2) angeordnet sind.

2. Dämpfervorrichtung (1) nach Anspruch 1,
bei der der erste Stopperabschnitt (71) einen Endabschnitt des ersten elastischen Abschnitts trägt,
bei der der zweite Stopperabschnitt (72) den anderen Endabschnitt des ersten elastischen Abschnitts (5) trägt,
bei der der dritte Stopperabschnitt (73) einen Endabschnitt des zweiten elastischen Abschnitts (6) trägt, und
bei der der vierte Stopperabschnitt (74) den anderen Endabschnitt des zweiten elastischen Abschnitts (6) trägt.

3. Dämpfervorrichtung (1) nach Anspruch 1 oder 2,
bei der der erste Stopperabschnitt (71) ein erstes Tragbauteil (71) aufweist, das durch den ersten Rotor (4) schwenkbar getragen wird und das einen Endabschnitt des ersten elastischen Abschnitts (5) trägt,
bei der der zweite Stopperabschnitt (72) ein zweites Tragbauteil (72) aufweist, das durch den dritten Rotor (3) schwenkbar getragen wird, das den anderen Endabschnitt des ersten elastischen Abschnitts (5) trägt und das den ersten Rotor (4) durch in Kontakt kommen mit dem ersten Tragbauteil (71) in einem Zustand, in dem sich der erste Rotor (4) bezüglich des zweiten Rotors (2) den ersten Winkel (θt1) zu einer Seite in der Drehrichtung dreht, zurückhält und daran hindert, sich bezüglich des dritten Rotors (3) zu einer Seite in der Drehrichtung zu drehen,
bei der der dritte Stopperabschnitt (73) ein drittes Tragbauteil (73) aufweist, das durch den dritten Rotor (3) schwenkbar getragen wird und das einen Endabschnitt des zweiten elastischen Abschnitts (6) trägt, und
bei der der vierte Stopperabschnitt (74) ein viertes Tragbauteil (74) aufweist, das durch den zweiten Rotor (2) schwenkbar getragen wird, das den anderen Endabschnitt des zweiten elastischen Abschnitts (6) trägt und das den dritten Rotor (3) durch in Kontakt kommen mit dem dritten Tragbauteil (3) in einem Zustand, in dem sich der erste Rotor (4) bezüglich des zweiten Rotors (2) den zweiten Winkel (θt2) zu einer Seite in der Drehrichtung dreht, zurückhält und daran hindert, sich bezüglich des zweiten Rotors (2) zu einer Seite in der Drehrichtung zu drehen.

4. Dämpfervorrichtung (1) nach einem der Ansprüche 1 bis 3,
bei der der erste elastische Abschnitt (5) eine erste Schraubenfeder (5) aufweist,
bei der der erste Stopperabschnitt (71) einen ersten konvexen Abschnitt (71c) aufweist, der in der ersten Schraubenfeder (5) angeordnet ist,
bei der der zweite Stopperabschnitt (72) einen zweiten konvexen Abschnitt (72c) aufweist, der in der ersten Schraubenfeder (5) angeordnet ist und der den ersten Rotor (4) durch in Kontakt kommen mit dem ersten konvexen Abschnitt (71c) in einem Zustand, in dem sich der erste Rotor (4) bezüglich des zweiten Rotors (2) den ersten Winkel (θt1) zu einer Seite in der Drehrichtung dreht, zurückhält und daran hindert, sich bezüglich des dritten Rotors (3) zu einer Seite in der Drehrichtung zu drehen,
bei der der zweite elastische Abschnitt (6) eine zweite Schraubenfeder (6) aufweist,
bei der der dritte Stopperabschnitt (73) einen dritten konvexen Abschnitt (73c) aufweist, der in der zweiten Schraubenfeder (6) angeordnet ist, und
bei der der vierte Stopperabschnitt (74) einen vierten konvexen Abschnitt (74c) aufweist, der in der zweiten Schraubenfeder (6) angeordnet ist und der den dritten Rotor (3) durch in Kontakt kommen mit dem dritten konvexen Abschnitt (73c) in einem Zustand, in dem sich der erste Rotor (4) bezüglich des zweiten Rotors (2) den zweiten Winkel (θt2) zu einer Seite in der Drehrichtung dreht, zurückhält und daran hindert, sich bezüglich des zweiten Rotors (2) zu einer Seite in der Drehrichtung zu drehen.

5. Dämpfervorrichtung (1) nach einem der Ansprüche 1 bis 4,
bei der sich der erste Winkel (θt1) und der zweite Winkel (θt2) voneinander unterscheiden.

## Revendications

1. Appareil amortisseur (1) comprenant :
un premier rotor (4) qui peut tourner autour d'un centre de rotation (Ax) ;
un deuxième rotor (2) qui peut tourner autour du centre de rotation (Ax) ;
un troisième rotor (3) qui est interposé entre le premier rotor (4) et le deuxième rotor (2), et qui peut tourner autour du centre de rotation (Ax) ;
une première portion élastique (5) qui est interposée entre le premier rotor (4) et le troisième rotor (3), et qui est élastiquement comprimée par le premier rotor (4) tournant vers un côté dans un sens de rotation par rapport au troisième rotor (3) ;
une seconde portion élastique (6) qui est interposée entre le troisième rotor (3) et le deuxième rotor (2), et qui est élastiquement comprimée par le troisième rotor (3) tournant vers un côté dans le sens de rotation par rapport au deuxième rotor (2) ;
une première portion de bouchon (71) qui est disposée dans le premier rotor (4) ;
une deuxième portion de bouchon (72) qui est disposée dans le troisième rotor (3), et qui restreint le premier rotor (4) en venant en contact avec la première portion de bouchon (71) dans un état où le premier rotor (4) tourne à un premier angle (θt1) vers un côté dans le sens de rotation par rapport au deuxième rotor (2), et de tourner vers un côté dans le sens de rotation par rapport au troisième rotor (3) ;
une troisième portion de bouchon (73) qui est disposée dans le troisième rotor (3) ; et
une quatrième portion de bouchon (74) qui est disposée dans le deuxième rotor (2), et qui restreint le troisième rotor (3) en venant en contact avec la troisième portion de bouchon (73) dans un état où le premier rotor (4) tourne à un second angle (θt2) vers un côté dans le sens de rotation par rapport au deuxième rotor (2), et de tourner vers un côté dans le sens de rotation par rapport au deuxième rotor (2), **caractérisé en ce que** la première portion élastique (5) et la seconde portion élastique (6) sont disposées en série entre le premier rotor (4) et le deuxième rotor (2) dans une direction circonférentielle du centre de rotation (Ax).

2. Appareil amortisseur (1) selon la revendication 1,
dans lequel la première portion de bouchon (71) supporte une portion d'extrémité de la première portion élastique
dans lequel la deuxième portion de bouchon (72) supporte l'autre portion d'extrémité de la première portion élastique (5),
dans lequel la troisième portion de bouchon (73) supporte une portion d'extrémité de la seconde portion élastique (6), et
dans lequel la quatrième portion de bouchon (74) supporte l'autre portion d'extrémité de la seconde portion élastique (6).

3. Appareil amortisseur (1) selon les revendications 1 ou 2,
dans lequel la première portion de bouchon (71) inclut un premier organe de support (71) qui est supporté avec faculté de balancement par le premier rotor (4), et qui supporte une première portion d'extrémité de la première portion élastique (5),
dans lequel la deuxième portion de bouchon (72) inclut un deuxième organe de support (72) qui est supporté avec faculté de balancement par le troisième rotor (3), qui supporte l'autre portion d'extrémité de la première portion élastique (5), et qui restreint le premier rotor (4) en venant en contact avec le premier organe de support (71) dans un état où le premier rotor (4) tourne au premier angle (θt1) vers un côté dans le sens de rotation par rapport au deuxième rotor (2), et de tourner vers un côté dans le sens de rotation par rapport au troisième rotor (3),
dans lequel la troisième portion de bouchon (73) inclut un troisième organe de support (73) qui est supporté avec faculté de balancement par le troisième rotor (3), et qui supporte une portion d'extrémité de la seconde portion élastique (6), et
dans lequel la quatrième portion de bouchon (74) inclut un quatrième organe de support (74) qui est supporté avec faculté de balancement par le deuxième rotor (2), qui supporte l'autre portion d'extrémité de la seconde portion élastique (6), et qui restreint le troisième rotor (3) en venant en contact avec le troisième organe de support (3) dans un état où le premier rotor (4) tourne au second angle (θt2) vers un côté dans le sens de rotation par rapport au deuxième rotor (2), et de tourner vers un côté dans le sens de rotation par rapport au deuxième rotor (2).

4. Appareil amortisseur (1) selon l'une quelconque des revendications 1 à 3,
dans lequel la première portion élastique (5) inclut un premier ressort en hélice (5),
dans lequel la première portion de bouchon (71) inclut une première portion convexe (71c) qui est agencée à l'intérieur du premier ressort en hélice (5),
dans lequel la deuxième portion de bouchon (72) inclut une deuxième portion convexe (72c) qui est agencée à l'intérieur du premier ressort en hélice (5), et qui restreint le premier rotor (4) en venant en contact avec la première portion convexe (71c) dans un état où le premier rotor (4) tourne au premier angle (θt1) vers un côté dans le sens de rotation par rapport au deuxième rotor (2), et de tourner vers un côté dans le sens de rotation par rapport au troisième rotor (3),
dans lequel la seconde portion élastique (6) inclut un deuxième ressort en hélice (6),
dans lequel la troisième portion de bouchon (73) inclut une troisième portion convexe (73c) qui est agencée à l'intérieur du deuxième ressort en hélice (6), et
dans lequel la quatrième portion de bouchon (74) inclut une quatrième portion convexe (74c) qui est agencée à l'intérieur du deuxième ressort en hélice (6), et qui restreint le troisième rotor (3) en venant en contact avec la troisième portion convexe (73c) dans un état où le premier rotor (4) tourne au second angle (θt2) vers un côté dans le sens de rotation par rapport au deuxième rotor (2), et de tourner vers un côté dans le sens de rotation par rapport au deuxième rotor (2).

5. Appareil amortisseur (1) selon l'une quelconque des revendications 1 à 4,
dans lequel le premier angle (θt1) et le second angle (θt2) sont différents l'un de l'autre.
